(19) **Europäisches Patentamt / European Patent Office / Office européen des brevets**

(11) **EP 3 449 631 B1**

(12) **FASCICULE DE BREVET EUROPEEN**

(45) Date de publication et mention de la délivrance du brevet:
**12.06.2024 Bulletin 2024/24**

(21) Numéro de dépôt: **17719662.3**

(22) Date de dépôt: **05.04.2017**

(51) Classification Internationale des Brevets (IPC):
**H04N 19/122** (2014.01)   **H04N 19/176** (2014.01)
**H04N 19/147** (2014.01)   **H04N 19/625** (2014.01)

(52) Classification Coopérative des Brevets (CPC):
**H04N 19/625; H04N 19/122; H04N 19/147; H04N 19/176**

(86) Numéro de dépôt international:
**PCT/FR2017/050817**

(87) Numéro de publication internationale:
**WO 2017/187040 (02.11.2017 Gazette 2017/44)**

(54) **PROCEDE DE DECODAGE D'UNE IMAGE NUMERIQUE, PROCEDE DE CODAGE, DISPOSITIFS, ET PROGRAMMES D'ORDINATEURS ASSOCIES**

VERFAHREN ZUR DECODIERUNG EINES DIGITALEN BILDES, VERFAHREN ZUR CODIERUNG, VORRICHTUNGEN UND DAMIT ASSOZIIERTE COMPUTERPROGRAMME

METHOD OF DECODING A DIGITAL IMAGE, METHOD OF CODING, DEVICES, AND COMPUTER PROGRAMS ASSOCIATED THEREWITH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.04.2016 FR 1653704**

(43) Date de publication de la demande:
**06.03.2019 Bulletin 2019/10**

(73) Titulaire: **Fondation B-COM**
**35510 Cesson-Sévigné (FR)**

(72) Inventeurs:
• **PHILIPPE, Pierrick**
  **35520 MELESSE (FR)**
• **LORCY, Victorien**
  **35000 RENNES (FR)**
• **CASTEL, Pierre**
  **50300 SAINT MARTIN DES CHAMPS (FR)**

(74) Mandataire: **Jacobacci Coralis Harle**
**32, rue de l'Arcade**
**75008 Paris (FR)**

(56) Documents cités:
• **YUAN (TSINGHUA) Y ET AL: "CE2: Non-Square Quadtree Transform for symmetric motion partitions", 97. MPEG MEETING; 18-7-2011 - 22-7-2011; TORINO; (MOTION PICTURE EXPERT GROUP OR ISO/IEC JTC1/SC29/WG11),, no. m20837, 12 juillet 2011 (2011-07-12), XP030049400,**
• **GARY J. SULLIVAN ET AL: "Overview of the High Efficiency Video Coding (HEVC) Standard", IEEE TRANSACTIONS ON CIRCUITS AND SYSTEMS FOR VIDEO TECHNOLOGY., vol. 22, no. 12, 1 décembre 2012 (2012-12-01), pages 1649-1668, XP055284729, US ISSN: 1051-8215, DOI: 10.1109/TCSVT.2012.2221191**
• **XIN ZHAO ET AL: "Rate-Distortion Optimized Transform", 90. MPEG MEETING; 26-10-2009 - 30-10-2009; XIAN; (MOTION PICTURE EXPERT GROUP OR ISO/IEC JTC1/SC29/WG11),, no. M16926, 2 novembre 2009 (2009-11-02), XP030045516,**

**Description**

## 1. Domaine de l'invention

Le domaine de l'invention est celui de la compression de signal, en particulier d'une image numérique ou d'une séquence d'images numériques, divisée en blocs de pixels.
L'invention concerne plus particulièrement la transformation d'un bloc de pixels, issu ou non d'une prédiction. Elle trouve notamment son application dans un contexte de compétition de transformées.
Le codage/décodage d'images numériques s'applique notamment à des images issues d'au moins une séquence vidéo comprenant :

- des images issues d'une même caméra et se succédant temporellement (codage/décodage de type 2D),
- des images issues de différentes caméras orientées selon des vues différentes (codage/décodage de type 3D),
- des composantes de texture et de profondeur correspondantes (codage/décodage de type 3D), - etc.

La présente invention s'applique de manière similaire au codage/décodage d'images de type 2D ou 3D.
L'invention peut notamment, mais non exclusivement, s'appliquer au codage vidéo mis en oeuvre dans les codeurs vidéo actuels AVC (pour « Advanced Video Coding », en anglais) et HEVC (pour « High Efficiency Video Coding », en anglais) et leurs extensions (MVC, 3D-AVC, MV-HEVC, 3D-HEVC, post-HEVC, etc), et au décodage correspondant.

## 2. Présentation de l'art antérieur

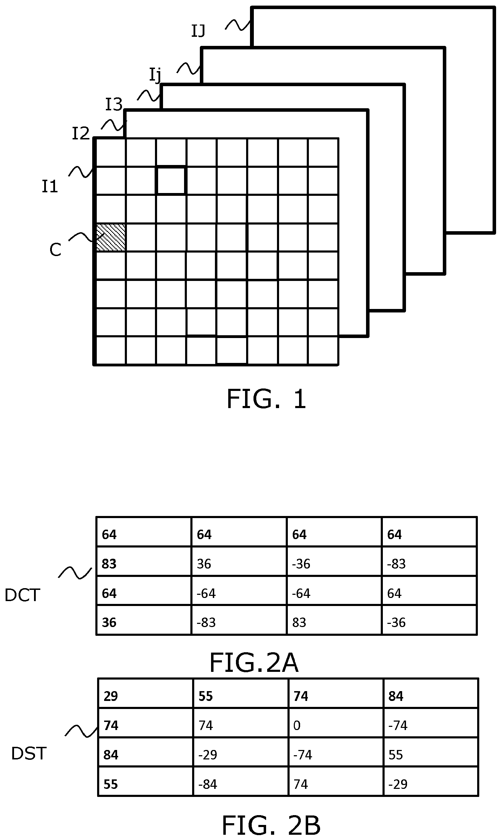

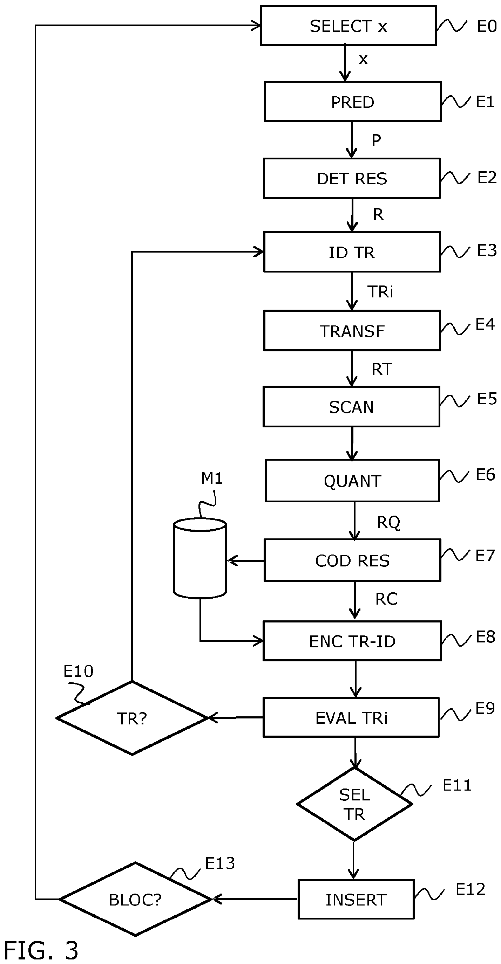

On considère un schéma de compression classique d'une image numérique, selon lequel l'image est divisée en blocs de pixels. Un bloc courant à coder, qui constitue une unité de codage initiale, est généralement découpé en un nombre variable de sous-blocs selon un mode de découpage prédéterminé. En relation avec la Figure **1,** on considère une séquence d'images numériques $I_1$, $I_2$, $I_j$, avec J entier non nul. Une image $I_j$ est découpée en unités de codage initiales ou CTU (pour « Coding Tree Unit » en anglais) selon la terminologie de la norme HEVC, telle que spécifiée dans le document "ISO/IEC 23008-2:2013 - High efficiency coding and media delivery in heterogeneous environments -- Part 2: High efficiency video coding », International Organization for Standardization, publié en novembre 2013. Les codeurs standards proposent généralement un partitionnement régulier, qui s'appuie sur des blocs carrés ou rectangulaires, appelés CU (pour « Coding Units », en anglais) de taille fixe. Le partitionnement se fait toujours à partir de l'unité de codage initiale, non partitionnée, et le partitionnement final est calculé puis signalé à partir de cette base neutre.
Chaque CU subit une opération d'encodage ou de décodage consistant en une suite d'opérations, comprenant de manière non exhaustive une prédiction, un calcul de résidu, une transformation, une quantification et un codage entropique. Cette suite d'opérations est connue de l'art antérieur et présentée en relation avec la Figure 3.
Au cours d'une étape E0, on sélectionne comme bloc courant c le premier bloc CTU à traiter. Par exemple, il s'agit du premier bloc (dans l'ordre lexicographique). Ce bloc est par exemple de taille 64x64 selon la norme HEVC.
On suppose qu'il existe D partitionnements en blocs CU possibles numérotées de 1 à D, avec D entier non nul et que le partitionnement utilisé sur le bloc c correspond au partitionnement numéro d. Par exemple, il peut y avoir 4 tailles de partitionnement carré possibles, en sous-blocs de taille 4x4, 8x8, 16x16, et 32x32 selon un mode de découpage régulier de type « quad tree » comme spécifié dans la norme HEVC. Un partitionnement en sous-blocs rectangulaires est aussi possible.
Dans la suite, on désigne par bloc courant un sous-bloc P issu du partitionnement du bloc CTU c. Les étapes qui vont être décrites sont répétées pour les autres sous-blocs. Au cours d'une étape E1, on détermine une prédiction Pr du bloc CU P. Il s'agit d'un bloc de prédiction construit par des moyens connus, typiquement par compensation de mouvement (bloc issu d'une image de référence précédemment décodée), ou par prédiction intra (bloc construit à partir des pixels décodés appartenant à l'image ID). Les informations de prédiction liées à Pr sont codées dans le train binaire TB ou fichier compressé FC. On suppose ici qu'il y a P modes de prédiction possibles $m_1$, $m_2$,..., $m_p$, avec P entier non nul. Par exemple, le mode de prédiction choisi pour le bloc courant x est le mode $m_p$. Certains modes de prédiction sont associés à une prédiction de type Intra, d'autres à une prédiction de type INTER.
Au cours d'une étape E2, un résidu original R est formé, par soustraction R = P-Pr de la prédiction Pr du bloc courant P au bloc courant P.
En E3, on identifie une transformée T à appliquer au résidu R ou à un sous-bloc issu d'une subdivision de R.
L'étape de transformation joue un rôle crucial dans un tel schéma de codage vidéo : en effet, c'est elle qui concentre l'information avant l'opération de quantification. Il en résulte qu'un ensemble de pixels avant encodage se voit représenté sur un faible nombre de coefficients fréquentiels non-nuls représentant la même information. Ainsi, au lieu de transmettre un grand nombre de coefficients, seul un petit nombre sera nécessaire pour reconstituer avec fidélité un bloc de pixels.

Cette étape de transformation est complexe à implémenter aussi bien côté codeur que côté décodeur, lequel doit mettre en oeuvre la transformation inverse de celle appliquée par l'encodeur.

Au cours d'une étape E4, le résidu R est transformé en un bloc résidu transformé, appelé RT, par la transformée identifiée. De façon alternative, en l'absence de prédiction, on obtient un bloc transformé RT à partir du bloc c. Il s'agit par exemple d'une transformée de type bloc ou d'une transformée en ondelettes, toutes connues de l'homme de métier et notamment mises en oeuvre dans les normes JPEG/MPEG pour la DCT/DST et JPEG2000 pour la transformée en ondelettes.

En codage d'image et vidéo, on utilise généralement des transformées blocs (4x4, 8x8 etc), orthogonales ou quasi-orthogonales. Les transformées les plus employées sont à base de bases cosinus ou sinus. On les désigne généralement par DTT (pour « Discrete Trigonométrie Transforms », en anglais). La DCT est ainsi présente dans la plupart des standards pour l'image et la vidéo. Récemment la norme HEVC a également introduit la DST (pour « Discrete Sine Transform », en anglais) pour le codage de résidus particuliers dans le cas de blocs de taille 4x4.

Dans les faits, ce sont des approximations de ces transformées qui sont employées, les calculs étant effectués sur des entiers. En général, les bases de transformées sont approximées à l'entier le plus proche, après multiplication par un facteur qui conditionne la précision donnée à l'approximation (ce facteur est souvent en puissance de 2 généralement de 8 ou 10 bits).

A titre d'exemple on présente en relation avec les Figures **2A** et **2B,** les transformées utilisées par la norme HEVC sur les blocs de taille 4x4 : Il s'agit des transformées DCT et DST. Les valeurs présentées dans ce tableau sont à diviser par 128 pour retrouver les transformations quasi-orthonormales.

En E5, de façon connue dans l'état de l'art, ces coefficients sont parcourus dans un ordre prédéterminé de façon à constituer un vecteur monodimensionnel RQ[j], où l'indice j varie de 0 à Nb-1, avec Nb entier égal au nombre de pixels du bloc x. L'indice j est appelé fréquence du coefficient RQ[j]. Classiquement, on scanne ces coefficients par ordre globalement croissant ou décroissant de valeurs de fréquence, par exemple selon un parcours prédéterminé, par exemple diagonal ou horizontal.

En E6, le bloc transformé RT est quantifié par des moyens classiques de quantification, par exemple scalaire ou vectorielle, en un bloc quantifié RQ comprenant autant de coefficients Nb que le bloc RT.

Lors d'une étape E7, on vient coder les informations relatives aux coefficients du bloc RQ par codage entropique, par exemple selon une technique de codage de Huffman ou de codage arithmétique. Ces informations comprennent au moins l'amplitude des coefficients et leur signe. Par amplitude, on entend ici la valeur absolue du coefficient. Classiquement, on peut coder pour chaque coefficient une information représentative du fait que le coefficient est non nul. Ensuite, pour chaque coefficient non nul, une ou plusieurs informations relatives à l'amplitude sont codées. On obtient les amplitudes codées CA. On code aussi les signes des coefficients non nuls. En général, ils sont simplement codés par un bit 0 ou 1, chaque valeur correspondant à une polarité donnée. Un tel codage obtient des performances efficaces, car, du fait de la transformation, les valeurs des amplitudes à coder sont en grande majorité nulles.

Concernant la transformée appliquée, dans le cas de la norme HEVC, on indique au décodeur par un bit, appelé « transform_skip_flag », la transformée inverse à appliquer parmi les deux alternatives DST ou absence de transformée. Ce cas se présente dans le cas de blocs de taille 4x4.

En E8, les données codées relatives au bloc courant x sont insérées dans le train binaire TB.

Les autres sous-blocs qui constituent le bloc R de l'image I1 sont traités de la même façon, puis les autres blocs CTU de l'image I1, ainsi que les blocs des images suivantes de la séquence.

L'étape de transformation d'un bloc courant en un bloc transformé engendre des calculs complexes, que l'homme du métier a tenté de simplifier et/ou d'accélérer.

Cette complexité augmente avec la taille des blocs traités. Dans HEVC, les transformées peuvent atteindre une taille de 32x32.

On connait notamment du document de Markus Püschel intitulé *Algebraic Signal Processing Theory: Cooley-Tukey Type Algorithms for DCTs and DSTs,* publié dans la revue IEEE transactions on Signal Processing, en avril 2008, une méthode d'implémentation rapide des familles de transformations DCT ou DST. Cette méthode concerne en particulier des transformées trigonométriques DCT et DST de types I à VIII et il est montré que des algorithmes rapides pour des tailles très particulières (typiquement en puissance de 2 ou proche d'une puissance de deux) peuvent être mis en oeuvre.

YUAN (TSINGHUA) Y ET AL: "CE2: Non-Square Quadtree Transform for symmetric motion partitions",97. MPEG MEETING; 18-7-2011 - 22-7-2011; TORINO; (MOTION PICTURE EXPERT GROUP OR ISO/IEC JTC1/SC29/WG11), no. m20837, 12 juillet 2011 (2011-07-12) divulgue pour décomposé une transformation non carrée en deux transformations pouvant être représentées chacune par une matrice carrée.

### 3. Inconvénients de l'art antérieur

Un inconvénient de ces types de transformations DCT ou DST est que toutes ne sont pas applicables à toutes les tailles de blocs, notamment parmi celles spécifiées dans la norme HEVC. Par exemple, la DST telle que spécifiée dans HEVC est limitée aux tailles de bloc 4x4, car elle induit une complexité importante pour les tailles supérieures.
Un autre inconvénient est que certaines transformées n'ont pas d'algorithmes rapides.

### 4. Objectifs de l'invention

L'invention vient améliorer la situation.
L'invention a notamment pour objectif de pallier ces inconvénients de l'art antérieur.
Plus précisément, un objectif de l'invention est de proposer une solution qui permette de réduire la complexité des calculs mis en oeuvre lors de l'application d'une transformée à un bloc de pixels, au codeur comme au décodeur.
Un autre objectif de l'invention est de proposer un gain en complexité qui n'ait pas d'impact sur l'efficacité en compression.
L'invention est exposée dans le jeu de revendications annexé.

### 5. Exposé de l'invention

Ces objectifs, ainsi que d'autres qui apparaîtront par la suite, sont atteints à l'aide d'un procédé de décodage d'une image numérique, à partir d'un train binaire comprenant des données codées représentatives de ladite image, ladite image étant divisée en une pluralité de blocs traités dans un ordre défini, ledit procédé comprenant les étapes suivantes, mises en oeuvre pour un bloc, dit bloc courant transformé:

- Décodage des coefficients du bloc courant à partir de données codées lues dans le train binaire ;
- Transformation du bloc courant en un bloc décodé, ladite étape mettant en oeuvre une première sous-étape destinée à produire un bloc intermédiaire, s'appliquant aux vecteurs colonnes respectivement lignes du bloc courant, la deuxième destinée à produire un bloc de pixels s'appliquant aux vecteurs lignes respectivement colonnes du bloc intermédiaire, issu de la première sous-étape ; et
- Reconstruction de l'image à partir du bloc décodé transformé.

Un tel procédé est particulier en ce qu'au moins une desdites première et deuxième sous-étapes de transformation, comprend, pour un vecteur ligne respectivement colonne, dit vecteur d'entrée :

- la formation d'un premier sous-vecteur de taille K<N respectivement M à partir d'éléments adjacents du vecteur d'entrée et d'au moins un deuxième sous-vecteur de taille égale à N-K respectivement M-K à partir d'éléments adjacents du vecteur d'entrée, non compris dans le premier sous vecteur, telle que la somme des tailles des sous-vecteurs formées est égale à la taille du vecteur d'entrée;

- la transformation du premier sous-vecteur en un premier sous-vecteur transformé par application d'une première sous-transformée partielle de taille KxK et la transformation du deuxième sous-vecteur en un deuxième sous-vecteur transformé par application d'une deuxième sous-transformée de taille (N-K)x(N-K); et

- l'obtention d'un vecteur d'entrée transformé du bloc intermédiaire pour la première sous-étape de transformation, respectivement du bloc décodé transformé pour la deuxième étape de transformation, par insertion du premier sous- vecteur transformé et du au moins un deuxième sous-vecteur transformé.

On considère une transformation séparable mise en oeuvre à partir de deux transformées orthogonales ou quasi-orthogonales.
L'invention repose sur une approche tout-à-fait nouvelle et inventive, selon laquelle on remplace au moins une des sous-étapes de transformation orthogonale, par au moins deux transformations partielles des vecteurs lignes ou colonnes du bloc à transformer. Chaque transformation partielle s'applique à un sous-vecteur du vecteur ligne ou colonne à transformer et constitue la seule transformation appliquée à ses éléments, puisque les coefficients issus de cette transformation sont directement replacés dans un vecteur de sortie destiné à l'étape de sous-transformation suivante. Il n'y a donc pas de recombinaison des valeurs obtenues avec d'autres données issues d'une transformation d'autres éléments du vecteur d'entrée.
Selon l'invention, la somme des tailles des sous-vecteurs formées est égale à la taille du vecteur d'entrée, et la composition du vecteur transformé comprend l'insertion des éléments du premier et du au moins un deuxième sous vecteur transformé aux positions initiales du premier et du au moins un deuxième sous-vecteurs formés dans le vecteur d'entrée.

Ainsi, tous les éléments des vecteurs d'entrée, ligne ou colonne, sont traités chacun par une et une seule sous-transformée. Comme prouvé plus loin dans la description, la décomposition en sous transformées partielles proposée par l'invention conduit à réaliser un nombre d'opérations inférieur ou égal à celui nécessaire pour appliquer une seule transformée de taille égale à celle des vecteurs d'entrée.

Selon un autre aspect de l'invention, la première et la deuxième sous-transformées sont de types différents.

Dans un contexte de compétition de transformées, le codeur sélectionne, pour le bloc courant, les transformées qui réalisent le meilleur compromis débit-distorsion. Lorsqu'une association de sous-transformées partielles selon l'invention est choisie pour au moins une des première ou deuxième sous-étapes, le gain en complexité de codage qui en résulte s'ajoute au gain en compression.

Selon un autre aspect de l'invention, une des au moins deux sous-transformées partielles est une transformée identité.

Il en résulte qu'au moins un sous-ensemble des pixels/coefficients des vecteurs (lignes ou colonnes) n'est pas transformé lors de la sous-étape de transformation, ce qui a pour effet de réduire la complexité de la transformation globale.

Selon encore un autre aspect de l'invention, au moins un des sous-vecteurs du vecteur d'entrée est de taille impaire.

Un avantage est qu'on peut lui appliquer une sous transformée partielle de taille impaire, pour laquelle on dispose d'un algorithme rapide. C'est le cas par exemple des transformées de type DTT de type DCT I.

Le procédé qui vient d'être décrit dans ses différents modes de réalisation est avantageusement mis en oeuvre par un dispositif de décodage d'une image numérique, à partir d'un train binaire comprenant des données codées représentatives de ladite image, ladite image étant divisée en une pluralité de blocs traités dans un ordre défini, ledit dispositif comprenant les unités suivantes, aptes à être mises en oeuvre pour un bloc, dit bloc courant transformé :

- Décodeur des coefficients du bloc courant à partir de données codées lues dans le train binaire ;
- Transformateur du bloc courant transformé en un bloc décodé transformé, ledit transformateur étant apte à mettre en oeuvre une première sous-unité de transformation apte à produire un bloc intermédiaire, s'appliquant aux vecteurs colonnes respectivement lignes du bloc courant, une deuxième sous-unité de transformation apte à produire un bloc de pixels s'appliquant aux vecteurs lignes respectivement colonnes du bloc intermédiaire, issu de la première sous-unité ; et
- Reconstructeur de l'image à partir du bloc décodé transformé.

Un tel dispositif est particulier en ce qu'au moins une desdites première et deuxième sous-unités de transformation, comprend, pour un dit vecteur ligne respectivement colonne, dit vecteur d'entrée :

- la formation d'un premier sous-vecteur de taille K<N respectivement N à partir d'éléments adjacents du vecteur d'entrée et d'au moins un deuxième sous-vecteur de taille égale à N-K respectivement M-K à partir d'éléments adjacents du vecteur d'entrée, non compris dans le premier sous vecteur, telle que la somme des tailles des sous-vecteurs formées est égale à la taille du vecteur d'entrée ;

- la transformation du premier sous-vecteur en un premier sous-vecteur transformé par application d'une sous-transformée partielle de taille KxK et la transformation du deuxième sous-vecteur en un deuxième sous-vecteur transformé par application d'une deuxième sous-transformée de taille (N-K)x(N-K); et

- la composition d'un vecteur transformé du bloc intermédiaire pour la première sous-étape de transformation, respectivement du bloc décodé transformé pour la deuxième étape de transformation par insertion du premier sous-vecteur transformé et du au moins un deuxième sous-vecteur transformé.

Corrélativement, l'invention concerne aussi un procédé de codage d'une image numérique, ladite image étant divisée en une pluralité de blocs de pixels traités dans un ordre défini, ledit procédé comprenant les étapes suivantes, mises en oeuvre pour un bloc courant de dimensions prédéterminées :

- Transformation du bloc courant en un bloc transformé, ledit bloc courant comprenant M vecteurs lignes et N vecteurs colonnes, avec M et N entiers non nuls, ladite étape comprenant une première sous-étape de transformation des M vecteurs lignes, respectivement colonnes, destinée à fournir un bloc intermédiaire formé à partir des vecteurs lignes respectivement colonne, transformés et une deuxième sous-étape de transformation des M vecteurs colonne, respectivement lignes du bloc intermédiaire ;

- Encodage du bloc transformé destiné à produire des données codées représentatives du bloc transformé ;
- Insertion des données codées dans un train binaire représentatif de l'image codée.

Selon l'invention, un tel procédé est particulier en ce qu'au moins une desdites première et deuxième sous-étapes de transformation, comprend, pour un vecteur ligne respectivement colonne, dit vecteur d'entrée :

- la formation d'un premier sous-vecteur de taille K<N respectivement N à partir d'éléments adjacents du vecteur d'entrée et d'au moins un deuxième sous-vecteur de taille égale à N-K respectivement M-K à partir d'éléments adjacents du vecteur d'entrée, non compris dans le premier sous vecteur, telle que la somme des tailles des sous-vecteurs formées est égale à la taille du vecteur d'entrée;

- la transformation du premier sous-vecteur en un premier sous-vecteur transformé par application d'une sous-transformée partielle de taille KxK et la transformation du deuxième sous-vecteur en un deuxième sous-vecteur transformé par application d'une deuxième sous-transformée de taille (N-K)x(N-K); et

- la composition d'un vecteur transformé du bloc intermédiaire pour la première sous-étape de transformation, respectivement du bloc décodé transformé pour la deuxième étape de transformation par insertion du premier sous-vecteur transformé et du au moins un deuxième sous-vecteur transformé.

Le procédé de codage selon l'invention réalise l'étape de transformation inverse de celle mise en oeuvre par le procédé de décodage qui vient d'être décrit avec ses différents modes de réalisation.

Le procédé de codage selon l'invention est avantageusement mis en oeuvre par un dispositif de codage d'une image numérique, ladite image étant divisée en une pluralité de blocs de pixels traités dans un ordre défini, ledit dispositif comprenant les unités suivantes, aptes à être mises en oeuvre pour un bloc courant (x), de dimensions prédéterminées :

- Transformateur du bloc courant en un bloc transformé, ledit bloc courant comprenant M vecteurs lignes et N vecteurs colonnes, avec M et N entiers non nuls, ledit transformateur comprenant une première sous-unité de transformation des M vecteurs lignes, respectivement colonnes, apte à fournir un bloc intermédiaire formé à partir des vecteurs lignes respectivement colonne, transformés et une deuxième sous-unité de transformation des M vecteurs colonne, respectivement lignes du bloc intermédiaire ;
- Encodeur du bloc transformé destiné à produire des données codées représentatives du bloc transformé ;
- Constructeur d'un train binaire représentatif de l'image codée apte à insérer lesdites données codées dans le train binaire ;

Un tel dispositif est particulier en ce qu'au moins une desdites première et deuxième sous-unités de transformation, comprend, pour un vecteur ligne respectivement colonne, dit vecteur d'entrée :

- la formation d'un premier sous-vecteur de taille K<N respectivement N à partir d'éléments adjacents du vecteur d'entrée et d'au moins un deuxième sous-vecteur de taille égale à N-K respectivement M-K à partir d'éléments adjacents du vecteur d'entrée, non compris dans le premier sous vecteur, telle que la somme des tailles des sous-vecteurs formées est égale à la taille du vecteur d'entrée ;

- la transformation du premier sous-vecteur en un premier sous-vecteur transformé par application d'une sous-transformée partielle de taille KxK et la transformation du deuxième sous-vecteur en un deuxième sous-vecteur transformé par application d'une deuxième sous-transformée de taille (N-K)x(N-K); et

- la composition d'un vecteur transformé du bloc intermédiaire pour la première sous-étape de transformation, respectivement du bloc décodé transformé pour la deuxième étape de transformation par insertion du au moins un premier sous- vecteur transformé et du au moins un deuxième sous-vecteur transformé.

L'invention concerne aussi un signal portant un train binaire comprenant des données codées représentatives d'une image numérique, ladite image numérique étant divisée en blocs de pixels traités dans un ordre défini, un bloc transformé étant obtenu par transformation des pixels d'un bloc courant, ladite transformation comprenant une première sous-étape destinée à produire un bloc intermédiaire, s'appliquant aux vecteurs lignes respectivement colonnes du bloc courant, la deuxième destinée à produire un bloc de pixels s'appliquant aux vecteurs colonnes respectivement lignes du bloc intermédiaire, issu de la première sous-étape.

Un tel signal est particulier en ce que, au moins une desdites première et deuxième sous-étapes de transformation comprenant la formation d'un sous-vecteur de taille K<N respectivement N à partir d'éléments adjacents d'un dit vecteur ligne respectivement colonne et d'au moins un deuxième sous-vecteur de taille égale à N-K respectivement M-K à partir d'éléments adjacents du vecteur d'entrée, non compris dans le premier sous vecteur, telle que la somme des tailles des sous-vecteurs formées est égale à la taille du vecteur d'entrée, l'application d'une sous-transformée partielle de taille KxK au dit sous-vecteur et l'application d'une deuxième sous-transformée de taille (N-K)x(N-K) audit deuxième sous-vecteur, et la composition d'un vecteur ligne respectivement colonne transformé par insertion du premier sous-vecteur transformé et du au moins un deuxième sous-vecteur transformé, ledit signal comprend un identifiant représentatif de ladite sous-transformée partielle.

L'invention concerne en outre un terminal d'utilisateur caractérisé en ce qu'il comprend le dispositif de codage d'une image numérique et le dispositif de décodage d'une image numérique qui viennent d'être décrits.

L'invention concerne encore un programme d'ordinateur comportant des instructions pour la mise en oeuvre des étapes d'un procédé de décodage d'une image numérique tel que décrit précédemment, lorsque ce programme est exécuté par un processeur.

L'invention concerne aussi un programme d'ordinateur comportant des instructions pour la mise en oeuvre des étapes d'un procédé de codage d'une image numérique tel que décrit précédemment, lorsque ce programme est exécuté par un processeur.

Ces programmes peuvent utiliser n'importe quel langage de programmation. Ils peuvent être téléchargés depuis un réseau de communication et/ou enregistrés sur un support lisible par ordinateur.

L'invention se rapporte enfin à des supports d'enregistrement, lisibles par un processeur, intégrés ou non au dispositif de codage d'une image numérique et au dispositif de décodage d'une image numérique selon l'invention, éventuellement amovible, mémorisant respectivement un programme d'ordinateur mettant en oeuvre un procédé de codage et un programme d'ordinateur mettant en oeuvre un procédé de décodage, tels que décrits précédemment.

## 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure **1** (déjà décrite) présente de façon schématique une séquence d'images numériques découpées en blocs de pixels ;

- les figures **2A** et **2B** (déjà décrites) présentent les transformées DCT et DST de taille 4 mises en oeuvre par l'encodeur de la norme HEVC ;

- la figure **3** (déjà décrite) présente de façon schématique les étapes d'un procédé de codage d'une image numérique selon l'art antérieur;

- la figure **4** présente de façon plus détaillée l'étape de transformation d'un bloc courant d'une image numérique selon l'art antérieur ;

- la figure **5** présente de façon schématique un exemple de sous-étape de transformation desvecteurs lignes ou colonnes d'un bloc selon un mode de réalisation de l'invention

- les figures **6A** à **6C** présentent des exemples de sous-transformées partielles selon l'invention ;

- la figure **7** présente de façon schématique les étapes d'un procédé de décodage d'une image numérique ;

- la figure **8** présente de façon schématique la structure matérielle d'un dispositif de codage d'une image numérique selon l'invention ; et

- la figure **9** présente de façon schématique la structure matérielle d'un dispositif de décodage d'une image numérique selon l'invention.

## 7. Description d'un mode de réalisation particulier de l'invention

Dans la suite de la description, on se place dans le cadre d'un schéma de codage d'une image numérique, par exemple tel que précédemment décrit en relation avec la Figure **3**.

On notera toutefois que l'étape de prédiction d'un bloc courant E1 précédemment décrite est optionnelle et que l'étape suivante E4 de transformation peut par conséquent s'appliquer directement aux pixels du bloc courant.

On considère un bloc courant rectangulaire de taille NxM (N colonnes, M lignes), avec N et M entiers non nuls et au moins une transformée $T_l$ à appliquer à ce bloc. La transformée $T_l$ appartient à un ensemble de L transformées $\{T_0, T_1,...T_l.., T_{L-1}\}$, avec L entier non nul.

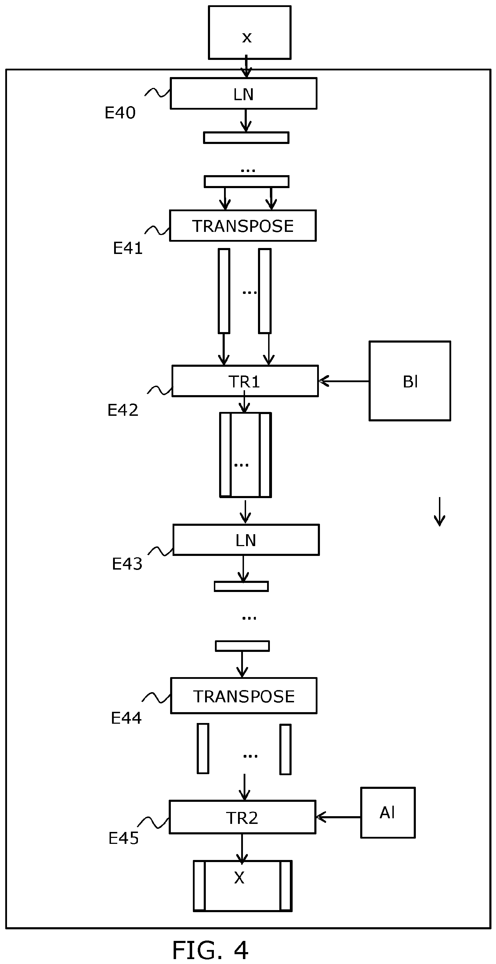

En relation avec la Figure **4,** on détaille un exemple de réalisation d'une transformation d'un bloc x de pixels à l'aide d'une transformée $T_l$. On considère, de façon connue de l'homme de métier que l'application de cette transformée $T_l$ peut être décomposée en deux sous-étapes successives de transformation par des transformées $B_l$ et $A_l$, qui vont maintenant être présentées.

En E40 on extrait les M vecteurs ligne Ln[m] de taille N du bloc courant x, avec m entier compris entre 0 et M-1. En E41, les M vecteurs Ln[m] sont transposés pour être présentés sous forme de vecteurs colonne de taille N. En E42, ils sont transformés par une première transformée $B_l$ de taille NxN. Un bloc intermédiaire de taille MxN est obtenu. En E43, N vecteurs colonnes de taille M sont extraits, puis transposés en E44. Les vecteurs transposés Col[n] avec n compris entre 0 et N-1 sont transformés en E45 par une deuxième transformée $A_l$ de taille MxM.

Ainsi $A_l$ et $B_l$ peuvent opérer de la façon suivante :

$$X_l = A_l \cdot (B_l \cdot x^t)^t \qquad (1)$$

$A_l$ et $B_l$ sont des transformées qui peuvent s'exprimer sous forme de matrice carrées (resp. de taille MxM et NxN) et qui sont adaptées respectivement à transformer chaque vecteur constitutif du bloc de pixels. $X_l$ est le bloc de coefficients issu de la transformation du bloc x par la transformée $T_l$.

On peut aussi, exprimer $X_l$ sous d'autres formes équivalentes par exemple en omettant la transposition du bloc x. Dans ce cas on effectue le calcul :

$$X_l = B_l \cdot (A_l \cdot x)^t \qquad (2)$$

Dans ce cas, les N vecteurs colonnes sont transformés dans un premier temps par une transformation de taille M, suivie d'une transformation actant sur les lignes du résultat par M transformées de taille N.

De façon connue, on applique typiquement des transformées à des vecteurs lignes/colonnes de tailles égales à des puissances de 2. Par exemple, la norme HEVC transforme des vecteurs lignes/colonnes de tailles 4,8, 16 ou 32.

On suppose ici que les premières et deuxièmes transformées $A_l$, $B_l$ sont des transformées orthogonales ou quasi-orthogonales. De telles transformations ont pour propriété qu'une matrice de transformation multipliée par sa transposée présente uniquement des termes diagonaux constants non-nuls. Dans le cas quasi-orthogonal les termes en dehors de la diagonale présentent des valeurs négligeables par rapport à l'amplitude des termes diagonaux. De ce fait l'inverse d'une matrice orthogonale est approximée par sa transposée à un facteur près, si bien qu'au décodage, la transposée de la matrice utilisée à l'encodage pourra être appliquée.

On notera que les transformées $A_l$ et $B_l$ peuvent également être appliquées au travers d'une implémentation rapide par un algorithme qui se représente sous forme d'un diagramme composé de papillons (c'est-à-dire de combinaisons linéaires de termes pris deux à deux). Cela vaut pour toutes les transformations trigonométriques, comme décrit dans l'article de Markus Püschel déjà cité.

Une façon connue d'apprécier la complexité calculatoire d'une telle étape de transformation consiste à compter le nombre d'opérations d'addition et de multiplication nécessaires. La table **1** présentée ci-dessous donne quelques exemples d'estimations de complexité calculatoire faites selon cette méthode.

On distingue le « cas général » où une transformation est appliquée sous forme matricielle et des cas particuliers (DCT I, DCT II) qui s'appuient sur des implémentations rapides des transformations selon l'article de Markus Püschel cité plus-haut. Le nombre d'opérations rapporté est relatif au traitement d'un vecteur de pixels.

Table **1**

| Type transformée | Nombre Multiplications | Nombre Additions | Total Opérations | Opérations/pixel |
|---|---|---|---|---|
| Cas général taille 3 | 9 | 6 | 15 | 5 |
| Cas général taille 4 | 16 | 12 | 28 | 7 |
| Cas général taille 8 | 64 | 56 | 120 | 15 |
| DCT I taille 3 | 2 | 4 | 6 | 2 |
| DCT I taille 4 | 4 | 8 | 12 | 3 |

(suite)

| Type transformée | Nombre Multiplications | Nombre Additions | Total Opérations | Opérations/pixel |
|---|---|---|---|---|
| DCT II taille 3 | 4 | 4 | 8 | 2.67 |
| DCT II taille 4 | 4 | 8 | 12 | 3 |
| DCT II taille 7 | 8 | 30 | 38 | 5.43 |
| DCT II taille 8 | 14 | 26 | 40 | 5 |
| DCT I taille 3 | 0 | 4 | 4 | 1.33 |
| DCT I taille 4 | 8 | 8 | 16 | 4 |

On considère une matrice de transformation comprenant N lignes et N colonnes. Dans le cas général, on a N multiplications et N-1 additions pour chacune des lignes de la matrice. En conséquence au total on a N*N et N*(N-1) multiplications et additions. On a alors un nombre d'opération par valeur transformée de 2N-1.

On constate que la complexité augmente de façon importante avec la taille du bloc à traiter. On note aussi qu'il existe des transformées dites rapides, qui sont plus économes en ressources de calcul.

Dans le cas des transformées quasi-orthogonales, la transformation inverse revenant à appliquer la transformation à coefficients transposés, la complexité calculatoire pour l'inverse est identique à la transformation directe.

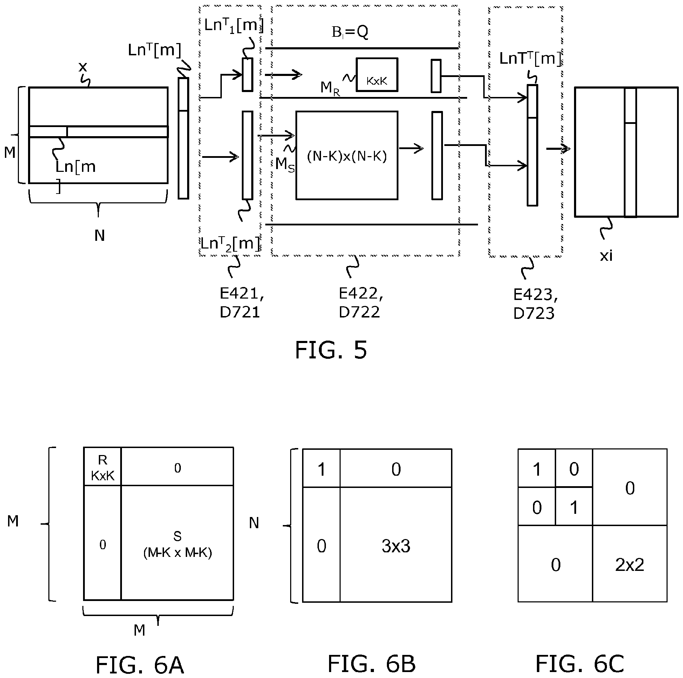

En relation avec la Figure **5**, on détaille maintenant l'étape de transformation E4 selon un mode de réalisation de l'invention. L'invention propose de modifier au moins une des étapes de sous-transformation E42 des colonnes, respectivement lignes E45 du bloc courant. Plus précisément, elle propose de remplacer l'application de la sous-transformée $A_I$ ou $B_I$ par l'application d'au moins une sous-transformée partielle à un sous-vecteur d'un vecteur colonne ou ligne. Le sous-vecteur obtenu est replacé dans le vecteur colonne ou ligne de sortie pour former le vecteur transformé par l'étape E42 ou E45. Il n'est pas recombiné avec d'autres données issues d'autres transformations potentielles du vecteur colonne ou ligne d'entrée.

De façon connue, la première étape E42 de sous-transformation par la transformée $B_I$ peut être réalisée à l'aide d'une matrice Q de taille NxN.

Dans l'exemple particulier de la Figure **5** et selon l'invention, la première étape E42 de sous transformation par la transformée $B_I$ est réalisée à l'aide de deux sous-transformées partielles R et S.

Par exemple l'étape de transformation des M vecteurs lignes transposés de taille N $Ln^T$ [m] par la sous-transformée particulière $B_I$ de taille NxN est réalisée par l'application d'une première sous-transformée R de taille KxK à un sous-ensemble des pixels des vecteurs colonnes du bloc et d'une deuxième sous transformée S de taille (N-K)x(N-K) au reste des pixels des vecteurs colonnes de ce bloc. Tous les éléments d'un vecteur sont donc traités une seule fois par une seule des deux sous transformées partielles.

Du point de vue mathématique, la transformée $B_I$ peut alors s'exprimer sous la forme d'une matrice $M_{BI}$ comprenant dans sa diagonale une sous matrice $M_R$ de taille KxK correspondant à la première sous-transformée R et une sous matrice $M_S$ de taille (N-K)x(N-K) correspondant à la deuxième sous-transformée S, le reste des éléments de la matrice $M_{BI}$ étant nul, comme représenté sur la Figure **6A.**

Ainsi, selon ce mode de réalisation de l'invention, pour transformer un vecteur avec la matrice $M_{BI}$, il suffit d'effectuer une transformation par la matrice $M_R$, qui traite les K premières valeurs d'un vecteur $Ln^T$ [m] et une transformation par la matrice $M_S$ qui couvre les N-K pixels restants de ce vecteur.

En relation avec la Figure **5,** on détaille la sous étape de transformation d'un m-ième vecteur ligne transposé $Ln^T$ [m] du bloc x à transformer par les deux sous-transformées partielles R et S selon l'invention. Un premier sous-vecteur $Ln^T_1$ [m] de taille K est formé en E421 à partir des K premiers éléments du vecteur Vm et un deuxième sous-vecteur $Ln^T_2$ [m] de taille N-K est formé à partir des N-K éléments restants du vecteur $Ln^T$ [m]. En E422, chaque sous vecteur est transformé par la matrice $M_R$, respectivement $M_S$ correspondant à la sous transformée partielle R respectivement S. Les sous-vecteurs transformés S $LnT^T_1$ [m] et $LnT^T_2$ [m] m sont replacés en E423 aux positions initiales des éléments des sous vecteurs $Ln^T$ [m] et $Ln^T$ [m] dans le vecteur transformé $Ln^T$ [m].

Ces opérations sont répétées pour les M vecteurs lignes transposés du bloc à transformer. Les M vecteurs transformés sont replacés à leurs positions initiales pour former le bloc intermédiaire BI.

On va maintenant montrer que scinder la matrice $M_{BI}$, en une partie $M_R$ traitant K points et une partie $M_S$ traitant N-K points (avec K<N-K, sans perte de généralité), engendre un abaissement de complexité.

Pour une transformation de taille N, appliquée sous forme matricielle :

- on a N*N multiplications et N*(N-1) additions.

Pour une transformation de taille K, appliquée sous forme matricielle :

- on a K*K multiplications et K*(K-1) additions.

Pour une transformation de taille N-K, appliquée sous forme matricielle :

- on a (N-K)*(N-K) multiplications et (N-K)*(N-K-1) additions.

Si on cumule les calculs associées aux transformations N-K et K, on comptabilise :

1. K*K + (N-K)*(N-K) multiplications
2. K*(K-1) + (N-K)*(N-K-1) additions

1. donne N*N +2*K*(K -N), or K<N donc 2*K*(K-N) est négatif, donc la quantité est inférieure à N*N qui est le nombre de multiplications pour la taille N
2. de façon analogue, on montre que le nombre d'additions est plus faible que pour la taille N.

On note que dans le cas particulier d'une DCT de type II (se référer à la table **1** ci-dessus), Q est de taille 8 et requiert 40 opérations au total, alors que l'implémentation de la transformée de la transformée partielle de taille 7 n'implique que 38 opérations.

Dans le cas particulier de la DCT de type 1 de taille 3 et 4 on comprend qu'il est notoirement plus favorable de traiter une transformée de taille 3 qui requiert 6 opérations à comparer aux 12 opérations requises par la taille 4.

Dans un premier exemple_particulier, N=8, K=4 et on évalue la complexité si R et S sont choisies comme des transformations de type DCT II, pour lesquelles un algorithme rapide est disponible.

La complexité calculatoire est alors de 12+12=24 opérations pour les 8 pixels constitutifs du vecteur, soit 3 opérations par pixel. Ceci est à comparer à une transformée de taille 8, de type DCT II, qui requiert 5 opérations par pixel.

Dans un second exemple particulier, N=8, K=4 et on évalue la complexité si R et S sont choisies comme des transformations implémentées sous forme de produit matriciel sans algorithme rapide disponible.

La complexité calculatoire est alors de 28+28=56 opérations pour les 8 pixels constitutifs du vecteur, soit 7 opérations par pixel. Ceci est à comparer à une transformée de taille 8, qui requiert 15 opérations par pixel.

Dans un troisième exemple particulier, N=8, K=4 et on évalue la complexité si R est choisie comme une DCT de type II et S comme une transformée appliquée sous forme de produit matriciel. Ceci permet d'appliquer une transformation adaptée, à une partie des vecteurs du bloc, cette transformée adaptée peut par exemple être de type RDOT telle que décrite dans l'article de O. Sezer déjà cité.

La complexité calculatoire est alors de 12+28=40 opérations pour les 8 pixels constitutifs du vecteur, soit 5 opérations par pixel. Ceci est à comparer à une transformée de taille 8 appliquée sous forme de produit matriciel qui requiert 15 opérations par pixel.

Il en résulte que l'invention réduit notoirement la complexité calculatoire. Dans les deux cas présentés ci-dessus on utilise respectivement 3/5=60% et 7/15=47% et 5/15=33% de la complexité d'une transformation de taille complète.

Selon un deuxième mode de réalisation de l'invention, la première sous-transformée de taille KxK est une transformation de type identité. Elle s'exprime comme une matrice ne contenant que des termes identiques sur sa diagonale. On a représenté la matrice $M_{BI}$ correspondante sur la Figure **6B** pour un bloc de taille 4x4.

A titre illustratif, on présente ci-dessous les transformées identité $I_3$ de taille 3x3, $I_2$ de taille 2x2 et $I_1$ de taille 1 :

$$I_3 = \begin{bmatrix} 1 & 0 & 0 \\ 0 & 1 & 0 \\ 0 & 0 & 1 \end{bmatrix}, \ I_2 = \begin{bmatrix} 1 & 0 \\ 0 & 1 \end{bmatrix}, \ I_1 = [1]$$

Sur la Figure **6C**, on a schématisé un autre exemple de matrice $M_{BI}$ une première sous transformée identité $I_2$ de taille 2 suivie d'une deuxième sous-transformée de taille 2x2.

Dans les deux cas, l'application de la sous-transformée R = $I_1$ respectivement $I_2$ ne nécessite aucun calcul dans ce cas particulier, ainsi l'application de la matrice $M_{BI}$ a la même complexité que la matrice MS.

On présente trois cas avec R=I1 et S prenant respectivement la forme d'une matrice de taille N-K=3, d'une DCT-II de taille N-K=3 et d'une DCT-II de taille N-K=7.

Table **2**

| Type transformée | Nombre Multiplications | Nombre Additions | Total Opérations | Opérations/pixel |
|---|---|---|---|---|
| N=4, K=1, S matrice cas général | 9 | 6 | 15 | 3.75 |
| N=4, K=1, S est une DCT II de taille N-K=3 | 4 | 4 | 8 | 2 |
| N=8, K=1, S est une DCT_II de taille N-K=7 | 8 | 30 | 38 | 4.75 |

La table **2** montre qu'avec ce mode de réalisation, le rapport de complexité est donc de 15/28=53% (28 correspond à la complexité due à une matrice 4x4 de type quelconque) et 8/12=67% (12 correspond au cas où on a une transformée rapide DCT II de taille 4) et 38/40=95 % de la complexité initiale.

Le premier mode de réalisation permet donc un gain de complexité supérieur à ce dernier mode.

On décrit maintenant un troisième mode de réalisation de l'invention qui s'inscrit dans un contexte de compétition de transformées. En relation avec la Figure 3, le procédé de codage identifie en E3 une transformée à appliquer au bloc courant parmi une pluralité de transformées prédéterminées et, suite aux étapes E4 à E8 de codage du bloc courant à l'aide de la transformée identifiée, il stocke les données codées dans une mémoire M1. Il répète ensuite les étapes E3 à E8 de codage du bloc courant avec les autres transformées de la liste. En E9, la meilleure transformée est sélectionnée, sur la base d'un critère débit-distorsion.

On connait de l'article de Arrufat et al, intitulé "Low Complexity Transform Compétition for HEVC », publié dans les Proceedings de la conférence ICASSP de mars 2016, une méthode de sélection d'un groupe restreint de transformées parmi une liste de plusieurs transformées « complètes » de type séparables, optimisées en distorsion ou à base de transformées discrètes trigonométriques, appelées DTT, auxquelles appartiennent les transformées DCT et DST.

Dans un premier temps, conformément à l'art antérieur, on évalue les performances de compression d'un codeur doté de transformations complètes, c'est-à-dire de tailles égales à celles du bloc traité. Pour ce faire, on dispose d'un ensemble de 16 types de transformées trigonométriques de taille 4, par exemple celles pour lesquelles on dispose d'une implémentation rapide telle que décrite dans l'article de Püschel déjà cité.

On évalue par exemple la liste de transformées suivante (8 types de DCT et 8 types de DST): DCT I, DCT-II, DCT-III, DCT-IV, DCT-V, DCT-VI, DCT-VII, DCT-VIII, DST-I, DST-II, DST-III, DST-IV, DST-V, DST-VI, DST-VII, DST-VIII.

Au total il y a donc 16x16=256 combinaisons possibles lorsqu'on combine les transformées verticales ($B_l$) et horizontales ($A_l$).

Pour évaluer ces différentes combinaisons de transformées, on mesure pour chaque paire, une compacité dans un plan distorsion/parcimonie, telle que décrite dans l'article déjà cité de Sezer, sur un ensemble de signaux résiduels d'images la quantité suivante:

$$J(\lambda) = \frac{1}{HNM} \sum_l \sum_{i \in TestSet} \left\| x_i - T_l^t \widehat{X_{l,i}} \right\|^2 + \lambda \left\| \widehat{X_{l,i}} \right\|_0 = \sum_l \sum_{i \in TestSet} Dist + \lambda Rate \qquad (3)$$

$x_i$ sont les blocs résiduels collectés sur un grand ensemble d'images variées. Dans ce cas précis, ils sont issus de blocs de taille 4x4 pour une prédiction intra angulaire d'indice 26 conformément à la norme HEVC. $\widehat{X_{l,i}}$ sont les blocs résiduels quantifiés par seuillage issus de la transformation des $x_i$ par $T_l$ composées de Al et Bl.

$\|.\|_0$ représente la norme zéro, c'est-à-dire le nombre de coefficients non-nuls dans $\widehat{X_{l,i}}$.

N,M sont les dimensions du bloc et H est le nombre de blocs considérés.

$\lambda$ est un multiplieur de Lagrange qui permet de régler la contrainte sur le nombre de coefficients non-nuls dans $\widehat{X_{l,i}}$., conformément à la publication de Sezer citée plus haut.

On choisit par exemple les 5 meilleures transformations $A_l$, $B_l$, c'est-à-dire celle qui produisent les 5 mesures de $j(\lambda)$ les plus faibles. Par apprentissage, conformément à la publication de Arrufat, on sélectionne ainsi les 5 paires de transformées les plus efficaces pour coder un ensemble de blocs résiduels issus d'une prédiction verticale.

Dans cet exemple, au sortir de la phase d'apprentissage, l'ensemble des 5 meilleures paires de transformées est celui de la table **3** :

Table **3**

| AI | BI |
|---|---|
| DST_VII | DST_VII |
| DST_IV | DCT_III |
| DCT_VI | DCT_I |
| DCT_V | DCT_IV |
| DCT_V | DST_IV |

La mesure de compacité (équation (1)) donne une valeur de **29.76** pour cette combinaison de 5 paires.

Selon le troisième mode de réalisation de l'invention, on ajoute à l'ensemble initial de transformées considérées pour l'apprentissage, des combinaisons de sous-transformées partielles de tailles KxK et (N-K)x(N-K). Dans l'exemple d'un bloc 4x4, il s'agit de sous-transformées partielles de tailles 1x1 et 3x3 ou 2x2 et 2x2. Les sous transformations dans ce mode de réalisation sont de type identité. Elles sont notées $ID_1$ et $ID_2$ pour les tailles respectives 1 et 2.

Ces combinaisons sont avantageusement proposées en association avec une transformée complète. Autrement dit, on décompose en au moins deux sous-transformées partielles soit la transformée $A_I$ soit la transformée $B_I$.

On réalise un apprentissage à partir de l'ensemble de transformées ainsi complété et, de façon analogue au cas précédent, on sélectionne les 5 couples $A_I$, $B_I$ qui contribuent à la plus faible mesure de compacité.

On obtient la sélection de transformations suivante :

Table **4**

| AI | BI |
|---|---|
| DST_VII | DST_VII |
| **ID1**,DST_IV | DCT_V |
| DST_IV | **ID2**,DST2_IV |
| DCT_V | **ID1**,DST_IV |
| DCT_V | DCT_VII |

On obtient une mesure de compacité égale à **29.34** pour cette nouvelle combinaison, ce qui équivaut à une amélioration de 1.38% de la compacité par rapport à la réalisation état de l'art.

L'invention est donc remarquable en ce qu'elle offre, en plus d'une réduction du nombre d'opérations comme montré ci-dessus, en relation avec les deux premiers modes de réalisation, une amélioration de la compression du signal.

On notera que dans les combinaisons présentées, au moins une des sous-transformées partielles est égale à l'identité et l'autre à une DST ou DCT. Bien sûr, l'invention ne se limite pas à ces exemples et couvre le cas de combinaisons d'au moins deux sous transformées partielles plus complexes, telles que par exemple une ID et une transformée adaptée RDOT ou une DST VII et une transformée adaptée RDOT.

Le procédé de codage produit un flux de données codées représentatif de la ou des images d'entrées. Le train binaire TB produit par le procédé de codage selon l'invention est par exemple transmis sous la forme d'un signal à un décodeur ou à un récepteur comprenant un dispositif de décodage par l'intermédiaire d'un réseau de télécommunication.

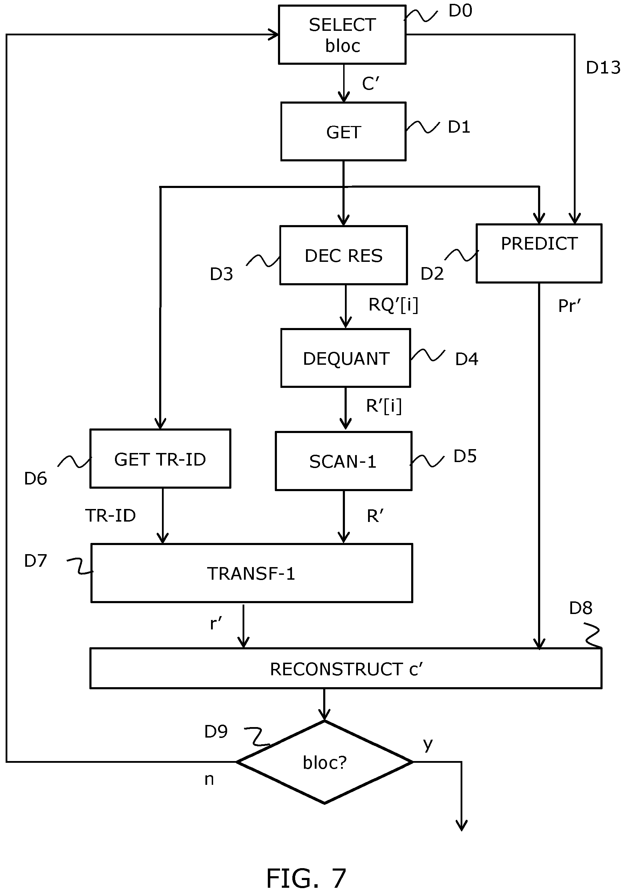

On suppose que le train binaire TB a été reçu par un dispositif de décodage mettant en oeuvre le procédé de décodage selon l'invention. Ce procédé de décodage va maintenant être décrit en relation avec la Figure **7.**

En D0, on commence par sélectionner comme bloc courant C' le premier bloc à traiter. Par exemple, il s'agit du premier bloc (dans l'ordre lexicographique). Ce bloc comporte Nb pixels, par exemple 64x64 comme spécifié dans la norme HEVC pour les blocs CTU.

Comme décrit pour le procédé d'encodage, le bloc courant considéré dans la suite peut être le bloc C' lui-même ou bien être issu d'une partition du bloc C' en sous-blocs CU. Il peut s'agir en outre d'un bloc résidu obtenu par soustraction d'une prédiction d'un sous-bloc CU ou du bloc courant. On désignera aussi par bloc courant un sous-bloc issu d'une division d'un sous-bloc CU, résidu ou non, avant sa transformation par une transformée $T_I$.

Au cours d'une étape D1, on lit les données codées relatives au bloc courant C'. Les données codées, comprennent des paramètres de codage, tels que par exemple le mode de prédiction utilisé, ou dans un contexte de compétition de transformée, une signalisation d'un identifiant de la transformée appliquée au bloc courant et les valeurs relatives aux amplitudes et aux signes des coefficients résidus quantifiés du bloc courant.

Lorsque le mode de prédiction déterminé indique qu'une prédiction a été faite par l'encodeur, le bloc courant est prédit en D2, selon le mode de prédiction déterminé à partir d'un bloc déjà traité. Un bloc prédit Pr' est obtenu.

Au cours d'une étape D3, on décode les données codées représentatives des valeurs quantifiées, résiduelles du bloc courant (valeurs et signes des coefficients), et on forme un vecteur monodimensionnel de valeurs RQ'[i] avec i entier compris entre 0 et MxN-1. On comprend qu'il s'agit de l'opération inverse de celle de codage entropique précédemment décrite en relation avec le procédé d'encodage.

En D4, les données du bloc courant RQ'[i] sont déquantifiées. On obtient un vecteur R'[i].

En D5, on réalise une réorganisation des données du vecteur monodimensionnel résidu dans le bloc courant, selon un processus inverse au parcours du bloc courant décrit dans l'étape E5 de la Figure **4.**

En D6, on identifie la transformée à appliquer au bloc courant. De façon connue, et par exemple conformément aux spécifications de la norme HEVC, le décodeur sait accéder à l'identifiant ID-TR de cette transformée, qui a été préalablement associé au mode de prédiction du bloc courant. Plus particulièrement, dans un contexte de compétition de transformées, l'identifiant de la transformée peut être reçu dans le train binaire comme un paramètre de codage, lu au cours de l'étape D1 puis décodé. Que ce soit dans un contexte de compétition de transformées ou non, cet identifiant de transformée permet en réalité d'identifier les deux transformées orthogonales ou quasi-orthogonales $A_l$ et $B_l$, qui sont appliquées successivement au bloc courant.

Selon l'invention, au moins une des deux sous étapes de transformations étant mise en oeuvre par l'application d'au moins deux sous-transformées partielles à des sous-ensembles disjoints d'éléments des vecteurs colonnes respectivement lignes du bloc courant R', l'étape d'identification de la transformée consiste donc à obtenir une liste ordonnée d'au moins trois identifiants de transformées, dont deux identifiants consécutifs correspondent aux sous-transformées partielles d'une des sous étapes de transformation et un identifiant à la transformée mise en oeuvre dans l'autre sous étape ($A_l$ ou $B_l$). Par exemple, pour la deuxième ligne de la table **4,** l'identifiant obtenu comprendra $A_l$ = ID1, DST-IV et $B_l$ = DCT-V.

Dans une étape D7, on applique au données déquantifiées, les transformées ($A_l$, $B_l$) correspondants aux identifiants obtenus en D6. Cette transformation correspond à l'opération inverse de celle réalisée à l'encodeur. Par exemple, si à l'encodage, on a décomposé la transformée $B_l$ en deux sous-transformées partielles R et S, telles que représentées en relation avec la Figure **6A**, on commence par appliquer la transformée transposée $A_l^T$ de taille MxM aux N vecteurs colonnes transposés du bloc résidu courant r' pour obtenir un bloc résidu intermédiaire ri', puis on applique les deux sous-transformées partielles transposées de R et S composant la transformation $B_l^T$ transposée à chacun des M vecteurs lignes transposés du bloc ri', la sous-transformée R étant appliquée aux K premiers éléments et la sous transformée S aux N-K éléments suivants de chaque vecteur colonne. Les sous-étapes D721 de formation des sous-vecteurs, D722 d'application des transformées partielles transposées et D743 de composition du vecteur transformés sont représentées sur la Figure **5** déjà décrite pour le procédé d'encodage. A l'issue de l'étape de transformation inverse, on obtient alors un signal ou bloc r' dans le domaine spatial.

Comme les sous-transformées appliquées au décodeur sont les transposées de celles appliquées à l'encodeur, la complexité engendrée est la même et donc présente un avantage par rapport à l'état de la technique.

Dans une étape D8, on reconstruit le bloc de pixels c' de l'image décodée à partir du bloc r' obtenu et on l'intègre à l'image $I_D$ en cours de décodage. Si le bloc c'est un bloc résidu, on lui ajoute la prédiction Pr' du bloc courant obtenue au cours de l'étape D2.

Au cours d'une étape D9, on vient tester si le bloc courant est le dernier bloc à traiter le décodeur, compte tenu de l'ordre de parcours défini précédemment. Si oui, le procédé de décodage a terminé son traitement. Si non, l'étape suivante est l'étape de sélection du bloc suivant D0 et les étapes de décodage D1 à D9 précédemment décrites sont répétées pour le bloc suivant sélectionné.

On notera que l'invention qui vient d'être décrite, peut être mise en oeuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en oeuvre la ou les fonctions décrites pour le module ou l'entité concerné(e).

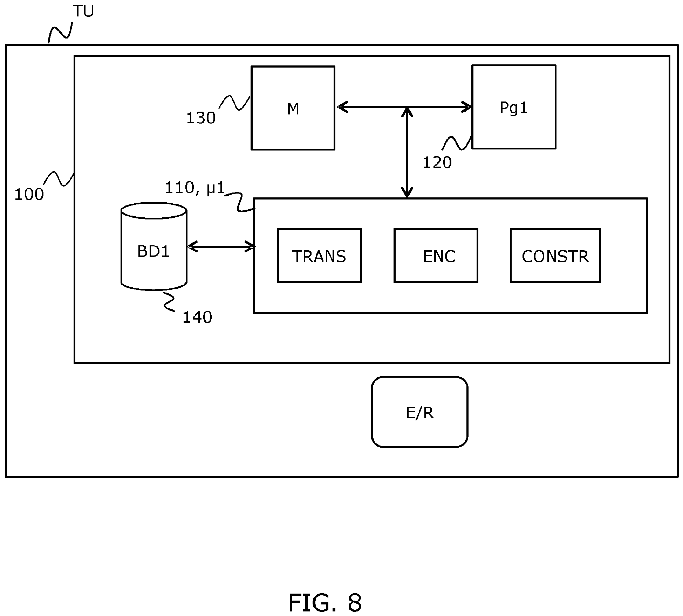

En relation avec la figure **8,** on présente maintenant un exemple de structure simplifiée d'un dispositif 100 de codage d'une image numérique selon l'invention. Le dispositif 100 met en oeuvre le procédé de codage selon l'invention qui vient d'être décrit en relation avec la Figure **3.**

Par exemple, le dispositif 100 comprend une unité de traitement 110, équipée d'un processeur $\mu_1$, et pilotée par un programme d'ordinateur $Pg_1$ 120, stocké dans une mémoire 130 et mettant en oeuvre le procédé de selon l'invention.

A l'initialisation, les instructions de code du programme d'ordinateur $Pg_1$ 120 sont par exemple chargées dans une mémoire RAM avant d'être exécutées par le processeur de l'unité de traitement 110. Le processeur de l'unité de traitement 110 met en oeuvre les étapes du procédé décrit précédemment, selon les instructions du programme d'ordinateur 120.

Dans cet exemple de réalisation de l'invention, le dispositif 100 comprend au moins un transformateur (TRANS) du bloc courant en un bloc transformé, ledit bloc courant comprenant M vecteurs ligne et N vecteurs colonne. Le transformateur est apte à appliquer une première sous-transformée des N vecteurs lignes transposés destinée à fournir un bloc résidu intermédiaire formé à partir des vecteurs lignes transposés transformés et une deuxième sous- transformation des M vecteurs lignes transposés du bloc intermédiaire en vecteurs lignes transposés transformés à partir desquels on forme le bloc transformé. Le dispositif 100 comprend en outre un encodeur ENC des coefficients du bloc transformé et un constructeur INSERT de train binaire comprenant des données codées représentatives de l'image codée qui est apte à insérer les coefficients codés.

Selon l'invention, pour au moins une desdites sous-transformations, le transformateur comprend les sous-unités de formation d'au moins un premier sous-vecteur de taille K<N respectivement N à partir d'éléments adjacents du vecteur d'entrée, de transformation du premier sous-vecteur en un premier sous-vecteur transformé par application d'une sous-transformée partielle de taille KxK et de composition du vecteur transformé par insertion du au moins un premier sous- vecteur transformé.

De façon avantageuse, un tel dispositif 100 peut être intégré à un terminal d'utilisateur TU. Le dispositif 100 est alors agencé pour coopérer au moins avec le module suivant du terminal TU :

- une mémoire de stockage M1, apte à stocker notamment les données codées intermédiaires, en particulier dans un contexte de compétition de transformées ;et

- un module E/R d'émission/réception de données, par l'intermédiaire duquel le train binaire TB ou le fichier compressé FC est transmis dans un réseau de télécommunications, par exemple un réseau filaire ou un réseau radio.

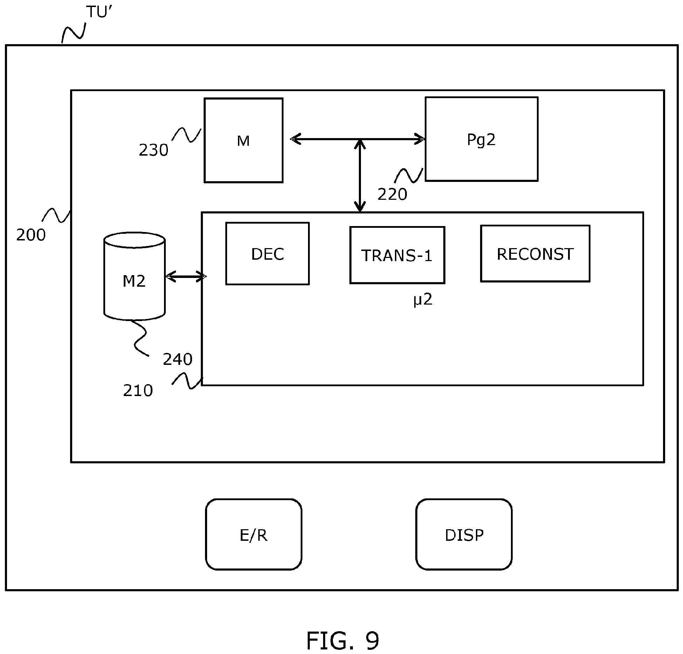

En relation avec la figure **9,** on présente maintenant un exemple de structure simplifiée d'un dispositif 200 de décodage d'une image numérique selon l'invention. Le dispositif 200 met en oeuvre le procédé de décodage selon l'invention qui vient d'être décrit en relation avec la Figure **7.**

Par exemple, le dispositif 200 comprend une unité de traitement 210, équipée d'un processeur $\mu_2$, et pilotée par un programme d'ordinateur $Pg_2$ 220, stocké dans une mémoire 230 et mettant en oeuvre le procédé de selon l'invention.

A l'initialisation, les instructions de code du programme d'ordinateur $Pg_2$ 220 sont par exemple chargées dans une mémoire RAM avant d'être exécutées par le processeur de l'unité de traitement 210. Le processeur de l'unité de traitement 210 met en oeuvre les étapes du procédé décrit précédemment, selon les instructions du programme d'ordinateur 120.

Dans cet exemple de réalisation de l'invention, le dispositif comprend un décodeur (DEC) des coefficients du bloc courant transformé à partir de données codées lues dans le train binaire, un transformateur inverse (TRANS$^{-1}$) du bloc courant transformée en un bloc décodé, apte à réaliser deux sous-transformations inverses successives, la première sous-transformation produisant un bloc intermédiaire et s'appliquant aux vecteurs colonne respectivement lignes du bloc courant, la deuxième produisant un bloc de pixels s'appliquant aux vecteurs lignes respectivement colonnes du bloc intermédiaire, issu de la première sous-transformation.

Selon l'invention, le transformateur inverse comprend les sous-unités de formation d'au moins un premier sous-vecteur de taille K<N respectivement N à partir d'éléments adjacents du vecteur d'entrée, de transformation du premier sous-vecteur en un premier sous-vecteur transformé par application d'une sous-transformée partielle de taille KxK et de composition du vecteur transformé par insertion du au moins un premier sous- vecteur transformé.

Le dispositif de décodage 200 comprend en outre un constructeur (RECONST) d'image décodée à partir du bloc décodé.

De façon avantageuse, un tel dispositif 200 peut être intégré à un terminal d'utilisateur TU. Le dispositif 200 est alors agencé pour coopérer au moins avec le module suivant du terminal TU :

- un module E/R d'émission/réception de données, par l'intermédiaire duquel le train binaire TB ou le fichier compressé FC est reçu d'un réseau de télécommunications, par exemple un réseau filaire ou un réseau radio.

Il va de soi que les modes de réalisation qui ont été décrits ci-dessus ont été donnés à titre purement indicatif et nullement limitatif.

**Revendications**

1. Procédé de décodage d'au moins une image numérique ($I_j$), à partir d'un train binaire (TB) comprenant des données codées représentatives de ladite image, ladite image ($I_j$) étant divisée en une pluralité de blocs traités dans un ordre défini, ledit procédé comprenant les étapes suivantes, mises en oeuvre pour un bloc, dit bloc courant transformé (C') :

   - Décodage (D1, D3) des coefficients du bloc courant à partir de données codées lues dans le train binaire ;
   - Transformation (D7) du bloc courant en un bloc décodé transformé, ledit bloc courant comprenant M vecteurs lignes et N vecteurs colonnes, avec M et N entiers non nuls, ladite étape mettant en oeuvre une première sous-étape destinée à produire un bloc intermédiaire, s'appliquant aux vecteurs lignes du bloc courant, la deuxième sous-étape destinée à produire un bloc de pixels s'appliquant aux vecteurs colonnes du bloc intermédiaire, issu de la première sous-étape ;
   - Reconstruction (D8) de l'image à partir du bloc décodé transformé ;

   **caractérisé en ce que** :
   la première sous-étape de transformation s'exprime sous la forme d'une matrice comprenant dans sa diagonale une sous matrice $M_R$ de taille KxK, avec K < N, correspondant à une première sous-transformée, et une sous matrice $M_S$ de taille (N-K)x(N-K), correspondant à une deuxième sous-transformée, et comprend, pour un dit vecteur ligne, dit vecteur d'entrée du bloc courant :

   - la formation d'un premier sous-vecteur de taille K à partir d'éléments adjacents du vecteur d'entrée et d'un deuxième sous-vecteur de taille égale à N-K à partir d'éléments adjacents du vecteur d'entrée, non compris dans le premier sous vecteur, telle que la somme des tailles des sous vecteurs formées est égale à la taille du vecteur d'entrée ;
   - la transformation du premier sous-vecteur en un premier sous-vecteur transformé par application de la première sous-transformée de taille KxK et la transformation du deuxième sous-vecteur en un deuxième sous-vecteur transformé par application de la deuxième sous-transformée de taille (N-K)x(N-K); et
   - la composition d'un vecteur transformé du bloc intermédiaire pour la première sous-étape de tranformation par insertion du premier sous-vecteur transformé et du deuxième sous-vecteur transformé.

2. Procédé de décodage d'au moins une image numérique selon la revendication 1, **caractérisé en ce que** la première et la deuxième sous-transformées sont de types différents.

3. Procédé de décodage d'au moins une image numérique selon l'une des revendications 1 ou 2, **caractérisé en ce qu'**une des au moins deux sous-transformées partielles est une transformée identité

4. Procédé de décodage d'au moins une image numérique selon l'une des revendications 1 à 3, **caractérisé en ce que** les deux sous-vecteurs sont de tailles différentes.

5. Procédé de décodage d'au moins une image numérique selon l'une des revendications précédentes, **caractérisé en ce qu'**au moins un des sous-vecteurs du vecteur d'entrée est de taille impaire.

6. Dispositif (200) de décodage d'au moins une image numérique, à partir d'un train binaire (TB) comprenant des données codées représentatives de ladite image, ladite image ($I_j$) étant divisée en une pluralité de blocs traités dans un ordre défini, ledit dispositif comprenant les unités suivantes, aptes à être mises en oeuvre pour un bloc, dit bloc courant transformé (C') :

   - Décodeur (DEC) des coefficients du bloc courant transformé à partir de données codées lues dans le train binaire ;
   - Transformateur (TRANS$^{-1}$) du bloc courant en un bloc décodé, ledit bloc courant comprenant M vecteurs lignes et N vecteurs colonnes, avec M et N entiers non nuls, ledit transformateur étant apte à mettre en oeuvre une première sous-unité de transformation apte à produire un bloc intermédiaire, s'appliquant aux vecteurs lignes du bloc courant, une deuxième sous-unité de transformation apte à produire un bloc de pixels s'appliquant aux vecteurs colonnes du bloc intermédiaire, issu de la première sous-unité;
   - Reconstructeur (RCONST) de l'image à partir du bloc décodé ;

   **caractérisé en ce que** :
   la première sous-unité de transformation correspond à une première sous-étape de transformation s'exprimant sous la forme d'une matrice comprenant dans sa diagonale une sous matrice $M_R$ de taille KxK, avec K < N, correspondant à une première sous-transformée, et une sous matrice $M_S$ de taille (N-K)x(N-K), correspondant à une deuxième sous-transformée, et, comprend, pour un dit vecteur ligne, dit vecteur d'entrée :

- la formation d'un premier sous-vecteur de taille K à partir d'éléments adjacents du vecteur d'entrée et d'un deuxième sous-vecteur de taille égale à N-K à partir d'éléments adjacents du vecteur d'entrée, non compris dans le premier sous vecteur, telle que la somme des tailles des sous vecteurs formées est égale à la taille du vecteur d'entrée ;
- la transformation du premier sous-vecteur en un premier sous-vecteur transformé par application de la première sous-transformée de taille KxK et la transformation du deuxième sous-vecteur en un deuxième sous-vecteur transformé par application de la deuxième sous-transformée de taille (N-K)x(N-K); et
- la composition d'un vecteur transformé du bloc intermédiaire pour la première sous-étape de transformation par insertion du premier sous-vecteur transformé et du deuxième sous-vecteur transformé.

**7.** Procédé de codage d'au moins une image numérique, ladite image ($I_i$) étant divisée en une pluralité de blocs de pixels traités dans un ordre défini, ledit procédé comprenant les étapes suivantes, mises en oeuvre pour un bloc courant (x), de dimensions prédéterminées :

- Transformation (E4) du bloc courant en un bloc transformé, ledit bloc courant comprenant M vecteurs lignes et N vecteurs colonnes, avec M et N entiers non nuis, ladite étape comprenant une première sous-étape (E42) de transformation des M vecteurs lignes destinée à fournir un bloc intermédiaire formé à partir des vecteurs lignes transformés et une deuxième sous-étape (E45) de transformation des N vecteurs colonne du bloc intermédiaire ;
- Encodage du bloc transformé destiné à produire des données codées représentatives du bloc transformé ;

- Insertion des données codées dans un train binaire représentatif de l'image codée ; **caractérisé en ce que** la première sous-étape de transformation s'exprime sous la forme d'une matrice comprenant dans sa diagonale une sous matrice $M_R$ de taille KxK, avec K < N, correspondant à une première sous-transformée, et une sous matrice $M_S$ de taille (N-K)x(N-K), correspondant à une deuxième sous-transformée, et, comprend, pour un vecteur ligne, dit vecteur d'entrée :

- la formation d'un premier sous-vecteur de taille K à partir d'éléments adjacents du vecteur d'entrée et d'un deuxième sous-vecteur de taille égale à N-K à partir d'éléments adjacents du vecteur d'entrée, non compris dans le premier sous vecteur, telle que la somme des tailles des sous vecteurs formées est égale à la taille du vecteur d'entrée;
- la transformation du premier sous-vecteur en un premier sous-vecteur transformé par application de la première sous-transformée de taille KxK et la transformation du deuxième sous-vecteur en un deuxième sous-vecteur transformé par application de la deuxième sous-transformée de taille (N-K)x(N-K); et
- la composition d'un vecteur ligne respectivement transformé du bloc intermédiaire pour la première sous-étape de transformation par insertion du premier sous-vecteur transformé et du deuxième sous-vecteur transformé.

**8.** Dispositif de codage d'au moins une image numérique, ladite image ($I_i$) étant divisée en une pluralité de blocs de pixels traités dans un ordre défini, ledit dispositif comprenant les unités suivantes, aptes à être mises en oeuvre pour un bloc courant (x), de dimensions prédéterminées :

- Transformateur (E4) du bloc courant en un bloc transformé, ledit bloc courant comprenant M vecteurs lignes et N vecteurs colonnes, avec M et N entiers non nuis, ledit transformateur comprenant une première sous-unité de transformation des M vecteurs lignes apte à fournir un bloc intermédiaire formé à partir des vecteurs transformés et une deuxième sous-unité de transformation des N vecteurs colonne, du bloc intermédiaire ;
- Encodeur du bloc transformé destiné à produire des données codées représentatives du bloc transformé ;
- Constructeur d'un train binaire représentatif de l'image codée apte à insérer lesdites données codées dans le train binaire ;

**caractérisé en ce que**
la première sous-unité de transformation correspond à une première sous-étape de transformation s'exprimant sous la forme d'une matrice comprenant dans sa diagonale une sous matrice $M_R$ de taille KxK, avec K < N, correspondant à une première sous-transformée, et une sous matrice $M_S$ de taille (N-K)x(N-K), correspondant à une deuxième sous-transformée, et comprend, pour un vecteur ligne, dit vecteur d'entrée :

- la formation d'un premier sous-vecteur de taille K à partir d'éléments adjacents du vecteur d'entrée et d'un deuxième sous-vecteur de taille égale à N-K à partir d'éléments adjacents du vecteur d'entrée, non compris dans le premier sous vecteur, telle que la somme des tailles des sous vecteurs formées est égale à la taille du vecteur d'entrée;
- la transformation du premier sous-vecteur en un premier sous-vecteur transformé par application de la première sous-transformée de taille KxK et la transformation du deuxième sous-vecteur en un deuxième sous-vecteur transformé par application de la deuxième sous-transformée de taille (N-K)x(N-K); et
- la composition d'un vecteur ligne transformé du bloc intermédiaire pour la première sous-étape de transformation, par insertion du premier sous-vecteur transformé et du deuxième sous-vecteur transformé.

9. Signal portant un train binaire (TB) comprenant des données codées représentatives d'au moins une image numérique ($I_j$), ladite image numérique étant divisée en blocs de pixels traités dans un ordre défini, lesdites données codées comprenant un bloc transformé étant obtenu par transformation des pixels d'un bloc courant, ledit bloc courant comprenant M vecteurs lignes et N vecteurs colonnes, avec M et N entiers non nuls, ladite transformation comprenant une première sous-étape destinée à produire un bloc intermédiaire, s'appliquant aux vecteurs lignes du bloc courant, la deuxième sous-étape destinée à produire un bloc de pixels s'appliquant aux vecteurs colonnes du bloc intermédiaire, issu de la première sous- étape, **caractérisé en ce que**, au moins la première sous-étape de transformation s'exprimant sous la forme d'une matrice comprenant dans sa diagonale une sous matrice $M_R$ de taille KxK, avec K < N, correspondant à une première sous-transformée, et une sous matrice $M_S$ de taille (N-K)x(N-K), correspondant à une deuxième sous-transformée, et comprenant la formation d'un sous-vecteur de taille K à partir d'éléments adjacents d'un dit vecteur ligne et d'un deuxième sous-vecteur de taille égale à N-K à partir d'éléments adjacents du vecteur d'entrée, non compris dans le premier sous vecteur, l'application de la première sous-transformée de taille KxK audit premier sous-vecteur et l'application de la deuxième sous-transformée de taille (N-K)x(N-K) audit deuxième sous-vecteur, la composition d'un vecteur ligne transformé du bloc intermédiaire pour la première sous-étape de transformation par insertion du premier sous-vecteur transformé et du deuxième sous-vecteur transformé, ledit signal comprend un identifiant représentatif de ladite première sous-transformée.

10. Terminal d'utilisateur (TU) **caractérisé en ce qu'**il comprend un dispositif de décodage d'au moins une image numérique selon la revendication 6 et un dispositif de codage d'au moins une image numérique selon la revendication 8.

11. Programme d'ordinateur comprenant des instructions pour la mise en oeuvre du procédé de décodage d'au moins une image numérique selon l'une des revendications 1 à 5, lorsqu'il est exécuté par un processeur.

12. Programme d'ordinateur comprenant des instructions pour la mise en oeuvre du procédé de codage d'au moins une image numérique selon la revendication 7, lorsqu'il est exécuté par un processeur.

**Patentansprüche**

1. Verfahren zur Dekodierung mindestens eines digitalen Bilds ($I_j$), von einem Bitstrom (TB) ausgehend, der für das Bild repräsentative kodierte Daten aufweist, wobei das Bild ($I_j$) in eine Vielzahl in einer bestimmten Reihenfolge bearbeiteter Blöcke aufgeteilt ist, wobei das Verfahren die folgenden für einen als laufenden umgewandelten Block (C') bezeichneten Block durchgeführten Schritte aufweist:

- Dekodierung (D1, D3) der Koeffizienten des laufenden Blocks, ausgehend von im Bitstrom gelesenen kodierten Daten;
- Umwandlung (D7) des laufenden Blocks in einen umgewandelten dekodierten Block, wobei der laufende Block M Zeilenvektoren und N Spaltenvektoren aufweist, wobei M und N ganze von Null verschiedene Zahlen sind, wobei der Schritt einen ersten Unterschritt durchführt, der dazu bestimmt ist, einen Zwischenblock zu bilden, und auf die Zeilenvektoren des laufenden Blocks angewendet wird, wobei der zweite Unterschritt dazu bestimmt ist, einen Pixelblock zu erzeugen, der auf die Spaltenvektoren des aus dem ersten Unterschritt hervorgegangenen Zwischenblocks angewendet wird;
- Rekonstruktion (D8) des Bilds aus dem umgewandelten dekodierten Block,

**dadurch gekennzeichnet, daß**

sich der erste Unterschritt der Umwandlung in Form einer Matrix darstellt, die in ihrer Diagonalen eine Untermatrix $M_R$ der Größe KxK, mit K < N, die einer ersten Untertransformierten entspricht, und eine Untermatrix Ms der Größe (N-K)x(N-K), die einer zweiten Untertransformierten entspricht, aufweist, und für einen als Eingangsvektor des laufenden Blocks bezeichneten Zeilenvektor:

- das Bilden eines ersten Untervektors der Größe K aus an den Eingangsvektor angrenzenden Elementen und eines zweiten Untervektors der Größe N-K aus an den Eingangsvektor angrenzenden Elementen, die nicht im ersten Untervektor enthalten sind, so daß die Summe der Größen der gebildeten Untervektoren gleich der Größe des Eingangsvektors ist;
- das Umwandeln des ersten Untervektors in einen ersten umgewandelten Untervektor durch Anwendung der ersten Untertransformierten der Größe KxK und Umwandeln des zweiten Untervektors in einen zweiten umgewandelten Untervektor durch Anwendung der zweiten Untertransformierten der Größe (N-K)x(N-K); und
- das Zusammenstellen eines umgewandelten Vektors des Zwischenblocks für den ersten Unterschritt der Umwandlung durch Einfügen des ersten umgewandelten Untervektors und des zweiten umgewandelten Untervektors

aufweist.

2. Verfahren zur Dekodierung mindestens eines digitalen Bilds gemäß Anspruch 1, **dadurch gekennzeichnet, daß** die erste und die zweite Untertransformierte unterschiedlichen Typs sind.

3. Verfahren zur Dekodierung mindestens eines digitalen Bilds gemäß Anspruch 1 oder 2, **dadurch gekennzeichnet, daß** eine der mindestens zwei Teiluntertransformierten eine Identitätstransformierte ist.

4. Verfahren zur Dekodierung mindestens eines digitalen Bilds gemäß einem der Ansprüche 1 bis 3, **dadurch gekennzeichnet, daß** die beiden Untervektoren unterschiedlicher Größe sind.

5. Verfahren zur Dekodierung mindestens eines digitalen Bilds gemäß einem der vorangehenden Ansprüche, **dadurch gekennzeichnet, daß** mindestens einer der Untervektoren des Eingangsvektors von ungeradzahliger Größe ist.

6. Vorrichtung (200) für eine Dekodierung mindestens eines digitalen Bilds, von einem Bitstrom (TB) ausgehend, der für das Bild repräsentative kodierte Daten aufweist, wobei das Bild ($I_j$) in eine Vielzahl in einer bestimmten Reihenfolge bearbeiteter Blöcke aufgeteilt ist, wobei die Vorrichtung die folgenden Einheiten aufweist, die dazu ausgelegt sind, für einen als laufenden umgewandelten Block (C') bezeichneten Block eingesetzt zu werden:

- Dekodierer (DEC) der Koeffizienten des laufenden umgewandelten Blocks, ausgehend von im Bitstrom gelesenen kodierten Daten;
- Umwandler (TRANS$^{-1}$) des laufenden Blocks in einen dekodierten Block, wobei der laufende Block M Zeilenvektoren und N Spaltenvektoren aufweist, wobei M und N ganze von Null verschiedene Zahlen sind, wobei der Umwandler dazu ausgelegt ist, eine erste Umwandler-Untereinheit einzusetzen, die dazu ausgelegt ist, einen Zwischenblock zu bilden, und auf die Zeilenvektoren des laufenden Blocks angewendet wird, eine zweite Umwandler-Untereinheit einzusetzen, die dazu ausgelegt ist, einen Pixelblock zu erzeugen, der auf die Spaltenvektoren des aus der ersten Umwandler-Untereinheit hervorgegangenen Zwischenblocks angewendet wird;
- Rekonstrukteur (RCONST) des Bilds aus dem dekodierten Block,

**dadurch gekennzeichnet, daß**
die erste Umwandler-Untereinheit einem ersten Unterschritt der Umwandlung entspricht, die sich in Form einer Matrix darstellt, die in ihrer Diagonalen eine Untermatrix $M_R$ der Größe KxK, mit K < N, die einer ersten Untertransformierten entspricht, und eine Untermatrix Ms der Größe (N-K)x(N-K), die einer zweiten Untertransformierten entspricht, aufweist, und für einen als Eingangsvektor bezeichneten Zeilenvektor:

- das Bilden eines ersten Untervektors der Größe K aus an den Eingangsvektor angrenzenden Elementen und eines zweiten Untervektors der Größe N-K aus an den Eingangsvektor angrenzenden Elementen, die nicht im ersten Untervektor enthalten sind, so daß die Summe der Größen der gebildeten Untervektoren gleich der Größe des Eingangsvektors ist;
- das Umwandeln des ersten Untervektors in einen ersten umgewandelten Untervektor durch Anwendung der ersten Untertransformierten der Größe KxK und Umwandeln des zweiten Untervektors in einen zweiten umgewandelten Untervektor durch Anwendung der zweiten Untertransformierten der Größe (N-K)x(N-K); und

- das Zusammenstellen eines umgewandelten Vektors des Zwischenblocks für den ersten Unterschritt der Umwandlung durch Einfügen des ersten umgewandelten Untervektors und des zweiten umgewandelten Untervektors

aufweist.

7. Verfahren zur Kodierung mindestens eines digitalen Bilds, wobei das Bild ($I_j$) in eine Vielzahl in einer bestimmten Reihenfolge bearbeiteter Pixelblöcke aufgeteilt ist, wobei das Verfahren die folgenden Schritte für einen laufenden Block (x) mit vorbestimmten Größen aufweist:

- Umwandlung (E4) des laufenden Blocks in einen umgewandelten Block, wobei der laufende Block M Zeilenvektoren und N Spaltenvektoren aufweist, wobei M und N ganze von Null verschiedene Zahlen sind, wobei der Schritt einen ersten Unterschritt (E42) der Umwandlung der M Zeilenvektoren, der dazu bestimmt ist, einen Zwischenblock, der aus den umgewandelten Zeilenvektoren gebildet ist, zu liefern, und einen zweiten Unterschritt (E45) der Umwandlung der N Spaltenvektoren des Zwischenblocks aufweist;
- Kodierung des umgewandelten Blocks, die dazu bestimmt ist, für den umgewandelten Block repräsentative kodierte Daten zu erzeugen;
- Einfügen der Kodierten Daten in einen für das kodierte Bild repräsentativen Bitstrom;

**dadurch gekennzeichnet, daß**
sich der erste Unterschritt der Umwandlung in Form einer Matrix darstellt, die in ihrer Diagonalen eine Untermatrix $M_R$ der Größe KxK, mit K < N, die einer ersten Untertransformierten entspricht, und eine Untermatrix Ms der Größe (N-K)x(N-K), die einer zweiten Untertransformierten entspricht, aufweist, und für einen als Eingangsvektor bezeichneten Zeilenvektor:

- das Bilden eines ersten Untervektors der Größe K aus an den Eingangsvektor angrenzenden Elementen und eines zweiten Untervektors der Größe N-K aus an den Eingangsvektor angrenzenden Elementen, die nicht im ersten Untervektor enthalten sind, so daß die Summe der Größen der gebildeten Untervektoren gleich der Größe des Eingangsvektors ist;
- das Umwandeln des ersten Untervektors in einen ersten umgewandelten Untervektor durch Anwendung der ersten Untertransformierten der Größe KxK und des Umwandeln des zweiten Untervektors in einen zweiten umgewandelten Untervektor durch Anwendung der zweiten Untertransformierten der Größe (N-K)x(N-K); und
- das Zusammenstellen eines jeweils umgewandelten Vektors des Zwischenblocks für den ersten Unterschritt der Umwandlung durch Einfügen des ersten umgewandelten Untervektors und des zweiten umgewandelten Untervektors

aufweist.

8. Vorrichtung für eine Kodierung mindestens eines digitalen Bilds, wobei das Bild ($I_j$) in eine Vielzahl in einer bestimmten Reihenfolge bearbeiteter Pixelblöcke aufgeteilt ist, wobei die Vorrichtung die folgenden Einheiten aufweist, die dazu ausgelegt sind, für einen laufenden Block (x) mit vorbestimmten Größen eingesetzt zu werden:

- Umwandler (E4) des laufenden Blocks in einen umgewandelten Block, wobei der laufende Block M Zeilenvektoren und N Spaltenvektoren aufweist, wobei M und N ganze von Null verschiedene Zahlen sind, wobei der Umwandler eine erste Untereinheit zum Umwandeln der M Zeilenvektoren, die dazu ausgelegt ist, einen Zwischenblock zu liefern, der aus den umgewandelten Vektoren gebildet ist, und eine zweite Untereinheit zum Umwandeln der N Spaltenvektoren des Zwischenblocks aufweist;
- Kodierer des umgewandelten Blocks, der dazu bestimmt ist, für den umgewandelten Block repräsentative kodierte Daten zu erzeugen;
- Konstrukteur eines für das kodierte Bild repräsentativen Bitstroms, der dazu ausgelegt ist, die kodierten Daten in den Bitstrom einzufügen;

**dadurch gekennzeichnet, daß** .
die erste Umwandler-Untereinheit einem ersten Unterschritt der Umwandlung entspricht, die sich in Form einer Matrix darstellt, die in ihrer Diagonalen eine Untermatrix $M_R$ der Größe KxK, mit K < N, die einer ersten Untertransformierten entspricht, und eine Untermatrix Ms der Größe (N-K)x(N-K), die einer zweiten Untertransformierten entspricht, aufweist, und für einen als Eingangsvektor bezeichneten Zeilenvektor:

- das Bilden eines ersten Untervektors der Größe K aus an den Eingangsvektor angrenzenden Elementen und eines zweiten Untervektors der Größe N-K aus an den Eingangsvektor angrenzenden Elementen, die nicht im ersten Untervektor enthalten sind, so daß die Summe der Größen der gebildeten Untervektoren gleich der Größe des Eingangsvektors ist;

- das Umwandeln des ersten Untervektors in einen ersten umgewandelten Untervektor durch Anwendung der ersten Untertransformierten der Größe KxK und Umwandeln des zweiten Untervektors in einen zweiten umgewandelten Untervektor durch Anwendung der zweiten Untertransformierten der Größe (N-K)x(N-K); und

- das Zusammenstellen eines umgewandelten Vektors des Zwischenblocks für den ersten Unterschritt der Umwandlung durch Einfügen des ersten umgewandelten Untervektors und des zweiten umgewandelten Untervektors

aufweist.

9. Signal, das einen Bitstrom (TB) trägt, der für mindestens ein digitales Bild ($I_j$) repräsentative kodierte Daten aufweist, wobei das digitale Bild in eine Vielzahl in einer bestimmten Reihenfolge bearbeiteter Pixelblöcke aufgeteilt ist, wobei die kodierten Daten einen durch Umwandlung der Pixel eines laufenden Blocks erhaltenen umgewandelten Block aufweisen, wobei der laufende Block M Zeilenvektoren und N Spaltenvektoren aufweist, wobei M und N ganze von Null verschiedene Zahlen sind, wobei die Umwandlung einen ersten Unterschritt aufweist, der dazu bestimmt ist, einen Zwischenblock zu bilden, der auf die Zeilenvektoren des laufenden Blocks angewendet wird, und einen zweiten Unterschritt aufweist, der dazu bestimmt ist, einen Pixelblock zu bilden, der auf die Spaltenvektoren des aus dem ersten Unterschritt hervorgegangenen Zwischenblocks angewendet wird, **dadurch gekennzeichnet, daß** sich mindestens der erste Unterschritt der Umwandlung in Form einer Matrix darstellt, die in ihrer Diagonalen eine Untermatrix $M_R$ der Größe KxK, mit K < N, die einer ersten Untertransformierten entspricht, und eine Untermatrix Ms der Größe (N-K)x(N-K), die einer zweiten Untertransformierten entspricht, aufweist, und das Bilden eines Untervektors der Größe K aus an einen Zeilenvektor angrenzenden Elementen und eines zweiten Untervektors der Größe N-K aus an den Eingangsvektor angrenzenden Elementen, die nicht im ersten Untervektor enthalten sind, die Anwendung der ersten Untertransformierten der Größe KxK auf den ersten Untervektor und die Anwendung der zweiten Untertransformierten der Größe (N-K)x(N-K) auf den zweiten Untervektor, das Zusammenstellen eines umgewandelten Zeilenvektors des Zwischenblocks für den ersten Unterschritt der Umwandlung durch Einfügen des ersten umgewandelten Untervektors und des zweiten umgewandelten Untervektors aufweist, wobei das Signal eine für die erste Untertransformierte repräsentative Kennung aufweist.

10. Nutzerterminal (TU) **dadurch gekennzeichnet, daß** es eine Vorrichtung zum Dekodieren mindestens eines digitalen Bilds gemäß Anspruch 6 und eine Vorrichtung zum Kodieren mindestens eines digitalen Bilds nach Anspruch 8 aufweist.

11. Computerprogramm, das Anweisungen für die Durchführung des Verfahrens zur Dekodierung mindestens eines digitalen Bilds gemäß einem der Ansprüche 1 bis 5 aufweist, wenn dieses durch einen Prozessor durchgeführt wird.

12. Computerprogramm, das Anweisungen für die Durchführung des Verfahrens zur Kodierung mindestens eines digitalen Bilds gemäß Anspruch 7 aufweist, wenn dieses durch einen Prozessor durchgeführt wird.

**Claims**

1. A method for decoding at least one digital image ($I_j$), based on a bit stream (TB) comprising encoded data representative of said image, said image ($I_j$) being divided into a plurality of blocks processed in a defined order, said method comprising the following steps, implemented for a block, called current transformed block (C'):

- decoding (D1, D3) coefficients of the current block from encoded data read in the bit stream;
- transforming (D7) the current block into a transformed decoded block, said current block comprising M row vectors and N column vectors, with M and N being non-zero integers, said step implementing a first sub-step intended to produce an intermediate block, applying to the row vectors of the current block, the second sub-step intended to produce a block of pixels applying to the column vectors of the intermediate block, resulting from the first sub-step;
- reconstructing (D8) the image from the transformed decoded block;

**characterised in that**:

the first transformation sub-step is expressed as a matrix comprising on its diagonal a sub matrix $M_R$ of size KxK, with K<N, corresponding to a first sub-transform, and a sub-matrix Ms of size (N-K)x(N-K), corresponding to a second sub-transform, and comprises, for one said row vector, called input vector of the current block:

- forming a first sub-vector of size K from adjacent elements of the input vector and a second sub-vector of size equal to N-K from adjacent elements of the input vector, not included in the first sub-vector, such that the sum of the sizes of the formed sub-vectors is equal to the size of the input vector;
- transforming the first sub-vector into a first transformed sub-vector by applying the first sub-transform of size KxK and transforming the second sub-vector into a second transformed sub-vector by applying the second sub-transform of size (N-K)x(N-K); and
- forming a transformed vector of the intermediate block for the first transformation sub-step by inserting the first transformed sub-vector and the second transformed sub-vector.

**2.** A method for decoding at least one digital image according to claim 1, **characterised in that** the first and second sub-transforms are of different types.

**3.** A method for decoding at least one digital image according to one of claims 1 or 2, **characterised in that** one of the at least two partial sub-transforms is an identity transform.

**4.** A method for decoding at least one digital image according to one of claims 1-3, **characterised in that** the two sub-vectors are of different sizes.

**5.** A method for decoding at least one digital image according to one of the preceding claims, **characterised in that** at least one of the sub-vectors of the input vector has an odd size.

**6.** A device (200) for decoding at least one digital image, based on a bit stream (TB) comprising encoded data representative of said image, said image ($I_j$) being divided into a plurality of blocks processed in a defined order, said device comprising the following units, capable of being implemented for a block, called current transformed block (C'):

- decoder (DEC) of the coefficients of the current transformed block from encoded data read in the bit stream;
- transformer (TRANS$^{-1}$) of the current block into a decoded block, said current block comprising M row vectors and N column vectors, with M and N being non-zero integers, said transformer being capable of implementing a first transformation sub-unit capable of producing an intermediate block, applying to the row vectors of the current block, a second transformation sub-unit capable of producing a block of pixels applying to the column vectors of the intermediate block, resulting from the first sub-unit;
- rebuilder (RCONST) of the image from the decoded block;

**characterised in that**:
the first transformation sub-unit corresponds to a first transformation sub-step expressed as a matrix comprising on its diagonal a sub matrix $M_R$ of size KxK, with K<N, corresponding to a first sub-transform, and a sub-matrix Ms of size (N-K)x(N-K), corresponding to a second sub-transform, and comprises, for one said row vector, called input vector:

- forming a first sub-vector of size K from adjacent elements of the input vector and a second sub-vector of size equal to N-K from adjacent elements of the input vector, not included in the first sub-vector, such that the sum of the sizes of the formed sub-vectors is equal to the size of the input vector;
- transforming the first sub-vector into a first transformed sub-vector by applying the first sub-transform of size KxK and transforming the second sub-vector into a second transformed sub-vector by applying the second sub-transform of size (N-K)x(N-K); and
- forming a transformed vector of the intermediate block for the first transformation sub-step by inserting the first transformed sub-vector and the second transformed sub-vector,

**7.** A method for encoding at least one digital image, said image ($I_j$) being divided into a plurality of blocks of pixels processed in a defined order, said method comprising the following steps, implemented for a current block (x), of predetermined dimensions:

- transforming (E4) the current block into a transformed block, said current block comprising M row vectors and N column vectors, with M and N being non-zero integers, said step comprising a first sub-step (E42) of transformation of the M row vectors intended to provide an intermediate block formed from the transformed row vectors and a second sub-step (E45) of transformation of the N column vectors of the intermediate block;
- encoding the transformed block intended to produce encoded data representative of the transformed block;
- inserting the encoded data into a bit stream representative of the coded image;

**characterised in that**
the first transformation sub-step is expressed as a matrix comprising on its diagonal a sub matrix $M_R$ of size KxK, with K<N, corresponding to a first sub-transform, and a sub-matrix Ms of size (N-K)x(N-K), corresponding to a second sub-transform, and comprises, for a row vector, called input vector:

- forming a first sub-vector of size K from adjacent elements of the input vector and a second sub-vector of size equal to N-K from adjacent elements of the input vector, not included in the first sub-vector, such that the sum of the sizes of the formed sub-vectors is equal to the size of the input vector;
- transforming the first sub-vector into a first transformed sub-vector by applying the first sub-transform of size KxK and transforming the second sub-vector into a second transformed sub-vector by applying the second sub-transform of size (N-K)x(N-K); and
- forming a respectively transformed row vector of the intermediate block for the first transformation sub-step by inserting the first transformed sub-vector and the second transformed sub-vector,

8. A device for encoding at least one digital image, said image ($I_j$) being divided into a plurality of blocks of pixels processed in a defined order, said device comprising the following units, capable of being implemented for a current block (x), of predetermined dimensions:

- transformer (E4) of the current block into a transformed block, said current block comprising M row vectors and N column vectors, with M and N being non-zero integers, said transformer comprising a first sub-unit of transformation of the M row vectors capable of providing an intermediate block formed from the transformed vectors and a second sub-unit of transformation of the N column vectors of the intermediate block;
- encoder of the transformed block intended to produce encoded data representative of the transformed block;
- builder of a bit stream representative of the coded image capable of inserting said encoded data into the bit stream;

**characterised in that**
the first transformation sub-unit corresponds to a first transformation sub-step expressed as a matrix comprising on its diagonal a sub matrix $M_R$ of size KxK, with K<N, corresponding to a first sub-transform, and a sub-matrix Ms of size (N-K)x(N-K), corresponding to a second sub-transform, and comprises, for a row vector, called input vector:

- forming a first sub-vector of size K from adjacent elements of the input vector and a second sub-vector of size equal to N-K from adjacent elements of the input vector, not included in the first sub-vector, such that the sum of the sizes of the formed sub-vectors is equal to the size of the input vector;
- transforming the first sub-vector into a first transformed sub-vector by applying the first sub-transform of size KxK and transforming the second sub-vector into a second transformed sub-vector by applying the second sub-transform of size (N-K)x(N-K); and
- forming a transformed row vector of the intermediate block for the first transformation sub-step, by inserting the first transformed sub-vector and the second transformed sub-vector.

9. A signal carrying a bit stream (TB) comprising encoded data representative of at least one digital image (Ij), said digital image ($I_j$) being divided into blocks of pixels processed in a defined order, said encoded data comprising a transformed block being obtained by transforming pixels of a current block, said current block comprising M row vectors and N column vectors, with M and N being non-zero integers, said transformation comprising a first sub-step intended to produce an intermediate block, applying to row vectors of the current block, the second sub-step intended to produce a block of pixels applying to column vectors of the intermediate block, resulting from the first sub-step,
**characterised in that**, at least the first transformation sub-step being expressed as a matrix comprising on its diagonal a sub matrix $M_R$ of size KxK, with K<N, corresponding to a first sub-transform, and a sub-matrix Ms of size (N-K)x(N-K), corresponding to a second sub-transform, and comprising the formation of a first sub-vector of size K from adjacent elements of one said row vector and a second sub-vector of size equal to N-K from adjacent elements of the input vector, not included in the first sub-vector, the application of the first sub-transform of size KxK to said first sub-vector and the application of the second sub-transform of size (N-K)x(N-K) to said second sub-vector, the formation of a transformed row vector of the intermediate block for the first transformation sub-step by inserting the first transformed sub-vector and the second transformed sub-vector, said signal includes an identifier representative of said first sub-transform.

10. A user terminal (TU) **characterised in that** it comprises a device for decoding at least one digital image according to claim 6 and a device for encoding at least one digital image according to claim 8.

11. A computer program comprising instructions for implementing the method for decoding at least one digital image according to one of claims 1-5, when it is executed by a processor.

12. A computer program comprising instructions for implementing the method for encoding at least one digital image according to claim 7, when it is executed by a processor.

FIG. 1

| 64 | 64 | 64 | 64 |
|----|----|----|----|
| 83 | 36 | -36 | -83 |
| 64 | -64 | -64 | 64 |
| 36 | -83 | 83 | -36 |

DCT

FIG.2A

| 29 | 55 | 74 | 84 |
|----|----|----|----|
| 74 | 74 | 0 | -74 |
| 84 | -29 | -74 | 55 |
| 55 | -84 | 74 | -29 |

DST

FIG. 2B

| SELECT x | ~ E0 |

x

| PRED | ~ E1 |

P

| DET RES | ~ E2 |

R

| ID TR | ~ E3 |

TRi

| TRANSF | ~ E4 |

RT

| SCAN | ~ E5 |

| QUANT | ~ E6 |

M1

RQ

| COD RES | ~ E7 |

RC

| ENC TR-ID | ~ E8 |

E10

TR?

| EVAL TRi | ~ E9 |

SEL TR ~ E11

E13

BLOC?

| INSERT | ~ E12 |

FIG. 3

FIG. 4

FIG. 5

FIG. 6A        FIG. 6B        FIG. 6C

FIG. 7

FIG. 8

TU'

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **YUAN (TSINGHUA) Y et al.** CE2: Non-Square Quadtree Transform for symmetric motion partitions. *97. MPEG MEETING; 18-7-2011 - 22-7-2011; TORINO; (MOTION PICTURE EXPERT GROUP OR ISO/IEC JTC1/SC29/WG11),* 12 Juillet 2011, (m20837

- **ARRUFAT et al.** *Low Complexity Transform Compétition for HEVC*